(19) Europäisches Patentamt
European Patent Office
Office européen des brevets

(11) **EP 4 721 973 A1**

(12) **EUROPEAN PATENT APPLICATION**
published in accordance with Art. 153(4) EPC

(43) Date of publication:
**08.04.2026 Bulletin 2026/15**

(21) Application number: **24815299.3**

(22) Date of filing: **21.05.2024**

(51) International Patent Classification (IPC):
***B32B 15/08*** *(2006.01)* ***B32B 7/12*** *(2006.01)*
***B32B 15/18*** *(2006.01)* ***B32B 15/20*** *(2006.01)*
***C22C 18/00*** *(2006.01)* ***C22C 18/04*** *(2006.01)*
***C22C 38/00*** *(2006.01)* ***C22C 38/04*** *(2006.01)*
***C23C 2/06*** *(2006.01)*

(52) Cooperative Patent Classification (CPC):
**B32B 7/12; B32B 15/08; B32B 15/18; B32B 15/20; C22C 18/00; C22C 18/04; C22C 38/00; C22C 38/04; C23C 2/06**

(86) International application number:
**PCT/JP2024/018653**

(87) International publication number:
**WO 2024/247815 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.05.2023 JP 2023087181**

(71) Applicant: **Nippon Steel Corporation**
**Tokyo 100-8071 (JP)**

(72) Inventors:
- **HASEGAWA Masumi**
  **Tokyo 100-8071 (JP)**
- **MITSUNOBU Takuya**
  **Tokyo 100-8071 (JP)**
- **UENO Shin**
  **Tokyo 100-8071 (JP)**

(74) Representative: **Vossius & Partner**
**Patentanwälte Rechtsanwälte mbB**
**Siebertstraße 3**
**81675 München (DE)**

(54) **ADHESIVE JOINT STRUCTURE AND AUTOMOBILE COMPONENT**

(57) An adhesively joined structure is adopted, a first member; a second member; and an adhesive layer that joins the first member and the second member to each other, in which either or both of the first member and the second member are a plated steel having a steel and a plating layer disposed on at least part of a surface of the steel, a surface of the plating layer is an uneven surface, in a cross section of the plating layer, a relationship between a length Lo of the plating layer in a longitudinal direction in an observation region of the cross section and a total length Lr of a contour line of the surface of the plating layer in the observation region satisfies the following expression (1), and at least some of the plurality of blocky binary eutectic structures or the plurality of blocky ternary eutectic structures included in the plating layer are continuously present from the surface of the plating layer to a position at 1/2 of an average thickness of the plating layer.

$$(Lr - Lo)/Lo \times 100 \geq 2.0(\%) \quad (1)$$

FIG. 1-4

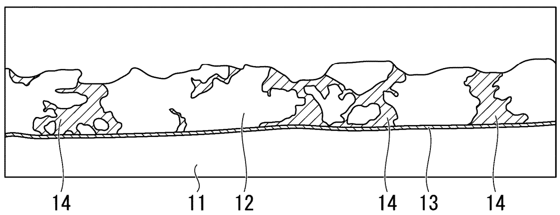


EP 4 721 973 A1

## Description

### TECHNICAL FIELD

The present disclosure relates to an adhesively joined structure and a component for a vehicle.

Priority is claimed on Japanese Patent Application No. 2023-087181, filed in Japan on May 26, 2023, the content of which is incorporated herein by reference.

### BACKGROUND ART

In the industrial field of transportation equipment such as vehicles, the application of an adhesive in joining between members is increasing for the purpose of improving vehicle body stiffness, assisting in welded part fracture, joining dissimilar materials, and the like. Since a significant improvement in performance can be expected by joining the members to each other using the adhesive, this is important as a method for reducing the weight of vehicle bodies. For this reason, in developing adhesively joined structures using an adhesive between metal members or between a metal member and another material as vehicle body components, various studies have been performed for the purpose of improving the joining strength between the members.

For example, the following Patent Document 1 proposes a technique of using an aluminum alloy material in which a predetermined oxide film is provided on the surface of an aluminum alloy substrate and a film having a siloxane bond is provided on the oxide film, and then joining such aluminum alloy materials to each other or joining such an aluminum alloy material with another member via an adhesive resin.

In addition, the following Patent Document 2 proposes a technique of using a chemical conversion treatment metal sheet having a chemical conversion treatment film containing a water-soluble resin and a lubricant having a carbon-oxygen bond formed on the surface of a metal substrate, and joining the chemical conversion treatment metal sheet with the resin layer via an adhesive layer.

In addition, Zn-Al-Mg-based hot-dip plated steels having a hot-dip Zn plating layer containing Al and Mg have excellent corrosion resistance. Therefore, for example, a Zn-Al-Mg-based hot-dip plated steel sheet obtained by performing Zn-Al-Mg-based hot-dip plating on a high-strength steel sheet is being investigated for application to a member for vehicle. As the Zn-Al-Mg-based hot-dip plated steels, for example, those described in Patent Documents 3 and 4 are known.

### Citation List

#### Patent Documents

Patent Document 1: PCT International Publication No. WO2016/076344
Patent Document 2: PCT International Publication No. WO2017/169571
Patent Document 3: PCT International Publication No. WO2018/139619
Patent Document 4: PCT International Publication No. WO2018/139620


### SUMMARY OF INVENTION

#### Technical Problem

In a case where an adhesive is applied as a method for joining members together, deterioration of component performance due to deterioration of the adhesive (decrease in adhesion) is unavoidable. This point applies to any of the techniques disclosed in Patent Document 1 and Patent Document 2. For this reason, there is a case where it is difficult to realize a long-term guarantee for the application of the adhesive in the actual environment and the application is limited or the design may be made in anticipation of deterioration depending on the part. In addition, it has been considered to apply a Zn-Al-Mg-based hot-dip plated steel having excellent corrosion resistance to components for a vehicle. However, a technique for improving the adhesion between the Zn-Al-Mg-based hot-dip plated steel and the adhesive layer has not been investigated.

The present disclosure has been made in view of the above problems, and an object thereof is to provide an adhesively joined structure and a component for a vehicle having excellent bonding durability and end surface corrosion resistance, manufactured by joining a member made of a Zn-Al-Mg-plated steel and another member with an adhesive.

Solution to problem

In order to achieve the above object, the present disclosure adopts the following configurations.

[1] An adhesively joined structure, including

a first member;
a second member; and
an adhesive layer that joins the first member and the second member to each other,
in which either or both of the first member and the second member are a plated steel having a steel and a plating layer disposed on at least part of a surface of the steel,
an average chemical composition of the plating layer conatins, by % by mass,

Al: 10.00% to 30.00%,
Mg: 1.00% to 15.00%,
Sn: 0.00% to 1.00%,
Si: 0.00% to 2.00%,
Ca: 0.00% to 2.00%,
Ni: 0.00% to 1.00%,
Fe: 0.01% to 15.00%,
Sb: 0.00% to 0.50%,
Pb: 0.00% to 0.50%,
Cu: 0.00% to 1.00%,
Ti: 0.00% to 1.00%,
Cr: 0.00% to 1.00%,
Nb: 0.00% to 1.00%,
Zr: 0.00% to 1.00%,
Mn: 0.00% to 1.00%,
Mo: 0.00% to 1.00%,
Ag: 0.00% to 1.00%,
Li: 0.00% to 1.00%,
Bi: 0.00% to 1.00%,
V: 0.00% to 1.00%,
Co: 0.00% to 1.00%,
In: 0.00% to 1.00%,
W: 0.00% to 1.00%,
P: 0.00% to 1.00%,
La: 0.00% to 0.50%,
Ce: 0.00% to 0.50%,
B: 0.00% to 0.50%,
Y: 0.00% to 0.50%,
Sr: 0.00% to 0.50%,

a total of Sb, Pb, Cu, Ti, Cr, Nb, Zr, Mn, Mo, Ag, Li, Bi, V, Co, In, W, P, La, Ce, B, Y, and Sr: 0.00% to 5.00%, and
a remainder: including Zn and impurities,
a surface of the plating layer is an uneven surface,
in a cross section of the plating layer, a relationship between a length Lo of the plating layer in a longitudinal direction in an observation region of the cross section and a total length Lr of a contour line of the surface of the plating layer in the observation region satisfies the following expression (1),
the plating layer includes one or both of a plurality of blocky binary eutectic structures and a plurality of blocky ternary eutectic structures, and
at least some of the plurality of blocky binary eutectic structures or the plurality of blocky ternary eutectic structures are continuously present from the surface of the plating layer to a position at 1/2 of an average thickness of the plating layer.

$$(Lr - Lo)/Lo \times 100 \geq 2.0(\%) \qquad (1)$$

[2] The adhesively joined structure described in [1],

in which the first member is the plated steel having the steel and the plating layer, and
the second member is any one of a hot-dip galvannealed steel, a fiber-reinforced plastic material, an aluminum alloy material, or a magnesium alloy material.

[3] The adhesively joined structure described in [1],

in which the plated steel includes the steel, the plating layer, and a film portion disposed on at least the uneven surface of the plating layer, and
the adhesive layer joins the first member and the second member to each other via the film portion.

[4] The adhesively joined structure described in [2],

in which the plated steel includes the steel, the plating layer, and a film portion disposed on at least the uneven surface of the plating layer, and
the adhesive layer joins the first member and the second member to each other via the film portion.

[5] The adhesively joined structure described in [3] or [4],

in which the film portion contains an organic resin phase containing one or more of a urethane group, an epoxy group, and an ester group, and an organic compound phase formed of an organic silicon compound having at least one of a Si-O bond or a Si-OH bond and a Si-C bond, and
in a case where the film portion is analyzed by time-of-flight secondary ion mass spectrometry while Ar sputtering the film portion from an adhesive layer side to a plating layer side to include an optional point of an interface between the plating layer and the film portion, a peak corresponding to a Si-O-Me bond is observed, and a value obtained by dividing a count number of peaks indicating the Si-O-Me bond by a total value of all detected secondary ion count numbers in a mass scan range of m/z = 0 to 300 is $1.0 \times 10^{-3}$ or more,
where the Me is one or two or more elements selected from Zn, Al, Mg, and Fe constituting the plating layer.

[6] The adhesively joined structure described in [1],

in which the plating layer contains an Fe-Al-based interface alloy layer that is in contact with the steel, and
at least some of the plurality of blocky binary eutectic structures or the plurality of blocky ternary eutectic structures are continuously present from the surface of the plating layer to the Fe-Al-based interface alloy layer.

[7] The adhesively joined structure described in [1],

in which, instead of the expression (1), the following expression (2) is satisfied, and
the number of points where at least some of the plurality of blocky binary eutectic structures or the plurality of blocky ternary eutectic structures are continuously present from the surface of the plating layer to a position at 1/2 of an average thickness of the plating layer is 3 to 15 per rectangular region having a long side of 500 μm and a short side of 150 μm on the surface of the plating layer.

$$(Lr - Lo)/Lo \times 100 \geq 6.0(\%) \qquad (2)$$

[8] The adhesively joined structure described in [1],

in which, instead of the expression (1), the following expression (3) is satisfied, and

the number of points where at least some of the plurality of blocky binary eutectic structures or the plurality of blocky ternary eutectic structures are continuously present from the surface of the plating layer to a position at 1/2 of an average thickness of the plating layer is 5 to 15 per rectangular region having a long side of 500 μm and a short side of 150 μm on the surface of the plating layer.

$$(Lr - Lo)/Lo \times 100 \geq 8.0(\%) \qquad (3)$$

[9] The adhesively joined structure described in [1], in which points where at least some of the plurality of blocky binary eutectic structures or the plurality of blocky ternary eutectic structures are continuously present from the surface of the plating layer to a position at 1/2 of an average thickness of the plating layer are present in recessed parts of the uneven surface of the plating layer.

[10] The adhesively joined structure described in [6], in which points where at least some of the plurality of blocky binary eutectic structures or the plurality of blocky ternary eutectic structures are continuously present from the surface of the plating layer to the Fe-Al-based interface alloy layer are present in recessed parts of the uneven surface of the plating layer.

[11] The adhesively joined structure described in [1], in which in the average chemical composition of the plating layer, Al and Mg are Al: 10.00% to 25.00% and Mg: 4.50% to 15.00%.

[12] The adhesively joined structure described in [1], in which in the average chemical composition of the plating layer, Al and Mg are Al: 15.00% to 22.00% and Mg: 5.00% to 15.00%.

[13] The adhesively joined structure described in any one of [1], [11], and [12],

in which in the average chemical composition of the plating layer, Sn is 0.05% to 0.50%, and
an $Mg_2Sn$ phase detected by X-ray diffraction measurement is in the plating layer.

[14] The adhesively joined structure described in any one of [1], [11], and [12], in which in the average chemical composition of the plating layer, one or both of La and Ce are contained, and a total amount of La and Ce is 0.05% to 0.50%.

[15] The adhesively joined structure described in [13], in which in the average chemical composition of the plating layer, one or both of La and Ce are contained, and a total amount of La and Ce is 0.05% to 0.50%.

[16] The adhesively joined structure described in any one of [1] to [4], in which the first member and the second member are further joined by second joining.

[17] The adhesively joined structure described in [16], in which the second joining is spot welding.

[18] A component for a vehicle, including the adhesively joined structure described in any one of [1] to [4] or [6] to [12].

[19] A component for a vehicle, including the adhesively joined structure described in [5].

[20] A component for a vehicle, including the adhesively joined structure described in [13].

[21] A component for a vehicle, including the adhesively joined structure described in [14].

[22] A component for a vehicle, including the adhesively joined structure described in [15].

[23] A component for a vehicle, including the adhesively joined structure described in [16].

[24] A component for a vehicle, including the adhesively joined structure described in [17].

Advantageous Effects of Invention

As described above, according to the above aspects of the present disclosure, it is possible to provide an adhesively joined structure having excellent bonding durability and corrosion resistance, manufactured by joining a member made of Zn-Al-Mg-plated steel and another member with an adhesive, and a component for a vehicle including the adhesively joined structure.

BRIEF DESCRIPTION OF DRAWINGS

[FIG. 1-1] A schematic perspective view of an adhesively joined structure according to an embodiment of the present disclosure.

[FIG. 1-2] A cross-sectional schematic view of a plated steel, which is an example of a first member.

[FIG. 1-3] A schematic view showing an example of an observed visual field when a cross section of a plating layer of the plated steel is observed with a scanning electron microscope.

[FIG. 1-4] A schematic view showing an example of the observed visual field when the cross section of the plating layer of the plated steel is observed with a scanning electron microscope.

[FIG. 1-5] A schematic view showing an example of an observed visual field when a cross section of a plating layer of a plated steel in the related art is observed with a scanning electron microscope.

[FIG. 2-1] An enlarged schematic view of a bonding region of the adhesively joined structure shown in FIG. 1-1.

[FIG. 2-2] A partially enlarged cross-sectional view of the bonding region of the adhesively joined structure shown in FIG. 1-1.

[FIG. 3] An enlarged schematic view illustrating a bonding region of an adhesively joined structure according to a modification example of the present disclosure.

[FIG. 4] A schematic perspective view of an adhesively joined structure according to another modification example of the present disclosure.

[FIG. 5] A schematic perspective view of an adhesively joined structure according to another modification example of the present disclosure.

[FIG. 6] A schematic view illustrating a bonded state of an adhesively joined structure according to another modification example of the present disclosure.

[FIG. 7] is a flowchart of an example of a method of manufacturing an adhesively joined structure according to the embodiment of the present disclosure.

DESCRIPTION OF EMBODIMENTS

The present inventors have investigated a method for improving the adhesion of an adhesive layer to a plating layer. The microstructure of a Zn-Al-Mg-based hot-dip plating layer containing Al, Mg, and Zn includes various phases or structures. For example, it is known that an Al phase and a $MgZn_2$ phase are crystallized in an initial solidification stage, and a binary eutectic structure or a ternary eutectic structure is crystallized in a later solidification stage. The present inventors conducted investigations, and found that the binary eutectic structure or the ternary eutectic structure has superior adhesion to the adhesive layer compared to the Al phase and the $MgZn_2$ phase.

In a Zn-Al-Mg-based hot-dip plating layer in the related art, the binary eutectic structure or the ternary eutectic structure may be exposed to the surface of the plating layer. The binary eutectic structure or the ternary eutectic structure is often distributed in a surface layer of the plating layer, specifically, in a range from the surface of the plating layer to a depth position of 1/4 to 1/3 of the average thickness of the plating layer. In the related art, it was considered that the adhesion of the adhesive layer is improved by the eutectic structures exposed to the surface of the plating layer. However, in a case where a member for vehicle is manufactured from a plated steel sheet, it is necessary to perform various kinds of processing on the plated steel sheet in order to obtain a member for vehicle having a desired shape. In this case, the plating layer subjected to such processing may have fine cracks on the surface thereof due to strain during the processing. It was found that when such cracks are generated around a eutectic structure exposed to the surface of the plating layer, the eutectic structure surrounded by the cracks may fall off from the plating layer, so-called powdering or flaking may occur, and the adhesion of the adhesive layer may not be improved.

Particularly, since the Zn-Al-Mg-based hot-dip plating layer is hard compared to a Zn-based plating layer in the related art, a relatively large number of cracks may be generated, the frequency of falling of the eutectic structure from the plating layer increases, and there is concern about a decrease in adhesion of the adhesive layer.

In addition, it was expected that the adhesion of the adhesive layer could be improved when the surface of the plating layer was an uneven surface rather than a flat surface.

Thus, the present inventors conducted investigations and have found that, by controlling the atmosphere in a duration from the time when a hot-dip plating bath is pulled up to the start of cooling after the hot-dip plating bath is adhered to a steel by a hot-dip plating method, adjusting the cooling rate during the cooling, and further selecting a suitable cooling gas, a binary eutectic structure or a ternary eutectic structure is continuously present up to a position deeper than the surface layer of the plating layer, specifically, at least to a position at a depth of 1/2 the average thickness of the plating layer from the surface of the plating layer, so that even in a case where cracks are generated, the eutectic structure does not fall off from the plating layer, thereby preventing a decrease in adhesion of the adhesive layer, and ultimately suppressing a deterioration in bonding durability. Moreover, it was found that the surface of the plating layer is formed into an uneven surface by controlling the atmosphere, adjusting the cooling rate, and selecting a suitable cooling gas, and the bonding durability can be further improved.

In addition, further improvement of the bonding durability was investigated and it was found that the bonding durability is further improved by providing a film portion containing a substance capable of forming a strong chemical bond with the plating layer of the plated steel between the plated steel and the adhesive layer and a substance having a high affinity with a resin of an adhesive constituting the adhesive layer, and suppressing water entering into a bonding interface between the plated steel and the adhesive layer by the film portion, in which the water entering into the bonding interface is considered to be a factor of a decrease in adhesion. The film portion is a selective component in the present disclosure.

Hereinafter, an adhesively joined structure and a component for a vehicle according to the present disclosure, which is an embodiment of the present disclosure, will be described with reference to the drawings. In the present specification and drawings, components having substantially the same functional configuration are designated by the same reference numerals to omit duplicate description.

(Configuration of adhesively joined structure)

FIG. 1-1 is a schematic perspective view of the entire adhesively joined structure according to the embodiment of the present disclosure.

An adhesively joined structure 1 shown in FIG. 1-1 has a first member 2 and a second member 3. The first member 2 is a so-called hat-type metal member. That is, the first member 2 includes a web portion, a pair of standing wall portions connected to both side edges of the web portion in a width direction, and a pair of flange portions connected to the standing wall portions and is a metal member of which the cross-sectional shape perpendicular to a longitudinal direction is hat-type. The web portion has a rectangular shape that is long in one direction. Also, the second member 3 has a shape along the inside of the web portion of the first member 2 and is joined to the first member 2 via an adhesive layer 4 in a bonding region 5 inside the web portion. Here, the inside of the web portion means a region surrounded by the web portion and the standing wall portions.

In order to facilitate a description of the configuration of the adhesively joined structure according to the present embodiment, a description will be made on the premise that the first member 2 is a hat-type in FIG. 1-1. However, as will be described below, of course, the respective members constituting the adhesively joined structure in the present embodiment are not limited to the shapes of the shown aspect. In addition, in the present embodiment, at least the first member 2 may be a plated steel. However, in the following description, a case where both the first member 2 and the second member 3 are plated steels will be described as an example. Hereinafter, the configuration in the bonding region 5 will be described with reference to FIG. 1-1.

<First member 2>

The first member 2 is made of, for example, a plated steel 21 described below. Hereinafter, the plated steel 21 will be described. In the following description, the first member 2 is described as a plated steel, but the adhesively joined structure according to the present embodiment is not limited thereto, and the second member 3 may be a plated steel, or both the first member 2 and the second member 3 may be plated steels.

<<Plated steel 21>>

The first member 2 is made of a plated steel 21. The plated steel includes a steel and a plating layer disposed on at least part of a surface of the steel.

The average chemical composition of the plating layer contains, by % by mass, Al: 10.00% to 30.00%, Mg: 1.00% to 15.00%, Sn: 0.00% to 1.00%, Si: 0.00% to 2.00%, Ca: 0.00% to 2.00%, Ni: 0.00% to 1.00%, Fe: 0.01% to 15.00%, Sb: 0.00% to 0.50%, Pb: 0.00% to 0.50%, Cu: 0.00% to 1.00%, Ti: 0.00% to 1.00%, Cr: 0.00% to 1.00%, Nb: 0.00% to 1.00%, Zr: 0.00% to 1.00%, Mn: 0.00% to 1.00%, Mo: 0.00% to 1.00%, Ag: 0.00% to 1.00%, Li: 0.00% to 1.00%, Bi: 0.00% to 1.00%, V: 0.00% to 1.00%, Co: 0.00% to 1.00%, In: 0.00% to 1.00%, W: 0.00% to 1.00%, P: 0.00% to 1.00%, La: 0.00% to 0.50%, Ce: 0.00% to 0.50%, B: 0.00% to 0.50%, Y: 0.00% to 0.50%, Sr: 0.00% to 0.50%, a total of Sb, Pb, Cu, Ti, Cr, Nb, Zr, Mn, Mo, Ag, Li, Bi, V, Co, In, W, P, La, Ce, B, Y, and Sr: 0.00% to 5.00%, and a remainder: including Zn and impurities.

In addition, the surface of the plating layer is an uneven surface, and in a cross section of the plating layer, the relationship between a length Lo of the plating layer in the longitudinal direction in an observation region of the cross section and a total length Lr of a contour line of the surface of the plating layer in the observation region satisfies the following expression (1), and the plating layer includes one or both of a plurality of blocky binary eutectic structures and a plurality of blocky ternary eutectic structures, and at least some of the plurality of blocky binary eutectic structures or the plurality of blocky binary eutectic structures are continuously present from the surface of the plating layer to a position at 1/2 of the average thickness of the plating layer.

FIG. 1-2 shows a cross-sectional schematic view of the plated steel 21. FIG. 1-2 is a schematic view illustrating the positional relationship between a steel 11 and a plating layer 12. In FIG. 1-2, an uneven surface of the surface of the plating layer 12 is not shown.

As shown in FIG. 1-2, the plated steel 21 according to the present embodiment has the steel 11. The shape of the steel 11 is not particularly limited. In addition, the material of the steel 11 is not particularly limited. Examples of the steel 11 include steel materials standardized in the Japanese Industrial Standards (JIS) and the like and may include carbon steel, alloy steel, high-tensile strength steel, and the like used for general structures and mechanical structures. Specific examples of such steel materials include cold-rolled steels, hot-rolled steels, hot-rolled steel sheet materials for vehicle structures, hot-rolled high-tensile strength steel sheet materials for vehicle processing, cold-rolled steel sheet materials for vehicle structures, cold-rolled high-tensile strength steel sheet materials for vehicle processing, high-tensile strength steels that are generally referred to as hot stamp materials subjected to quenching during hot working, and the like. The compositions of such steel materials are not particularly limited. The steels may be formed by performing processing such as hot pressing on a steel sheet.

In addition, the steel 11 constituting the plated steel 21 according to the present embodiment may be a high-tensile strength steel for a member for vehicle.

The plated steel 21 according to the present embodiment has the plating layer 12 disposed on at least part of the surface of the steel 11. In FIG. 1-2, the plating layer 12 is formed on one side of the steel 11, but the plating layer 12 may be formed on both surfaces of the steel 11. The plating layer 12 is preferably a plating film manufactured by so-called hot-dip plating treatment.

The plating layer 12 is mainly composed of a Zn-Al-Mg alloy layer due to a chemical composition to be described below. In addition, the plating layer 12 of the plated steel 21 according to the present embodiment may include an Fe-Al-based interface alloy layer containing Fe and Al as main components between the steel 11 and the Zn-Al-Mg alloy layer. That is, the plating layer 12 may have a single-layer structure of the Zn-Al-Mg alloy layer or may have a laminated structure including the Zn-Al-Mg alloy layer and the Fe-Al-based interface alloy layer.

Hereinafter, the chemical composition of the plating layer will be described. The expression of "%" for the content of each element of the chemical composition means "% by mass". The content of an element in the chemical composition may be denoted as an element concentration (for example, a Zn concentration, a Mg concentration, or the like).

The term "adhesion of the adhesive layer" indicates a property in which an adhesive layer is not easily peeled off from a plating layer in a case where the adhesive layer is provided on the surface of the plating layer or in a case where a film portion is provided on the surface of the plating layer and the adhesive layer is further provided on the film portion.

The term "planar corrosion resistance" refers to the property of a plating layer (specifically, the Zn-Al-Mg alloy layer) itself not being easily corroded.

Moreover, the term "end surface corrosion resistance" indicates the property of suppressing corrosion of a steel at an exposed portion of the steel (for example, a cut end surface of a plated steel).

The plating layer according to the present embodiment contains Zn and other alloying elements. The chemical composition of the plating layer will be described in detail below. An element for which the lower limit of the concentration is described to be 0.00% is an optional element that is not essential for solving the problem of the plated steel according to the present embodiment but is permitted to be contained in the plating layer for the purpose of improving characteristics, or the like.

<Al: 10.00% to 30.00%>

Al contributes to the improvement of planar corrosion resistance and the workability. Therefore, the Al concentration is set to 10.00% or more. On the other hand, in a case where Al is excessive, the Mg concentration and the Zn concentration relatively decrease, and the end surface corrosion resistance deteriorates. Therefore, the Al concentration is set to 30.00% or less. The Al concentration may be set to 10.00% to 25.00% or 15.00% to 22.00%. The Al concentration may be set to 11.00% or more, 13.00% or more, or 16.00% or more. The Al concentration may be set to 28.00% or less, 24.00% or less, or 20.00% or less.

<Mg: 1.00% to 15.00%>

Mg is an essential element for securing the planar corrosion resistance. In addition, Mg is also necessary to crystallize a binary eutectic structure, a ternary eutectic structure, an $Mg_2Sn$ phase, and the like. Therefore, the Mg concentration is set to 1.00% or more. On the other hand, in a case where the Mg concentration is excessive, the workability, particularly the powdering property, may deteriorate, and further, the planar corrosion resistance may deteriorate. Therefore, the Mg concentration is set to 15.00% or less. The Mg concentration may be set to 4.50% to 15.00% or 5.00% to 15.00%. The Mg concentration may be set to 2.00% or more, 3.00% or more, or 4.00% or more. The Mg concentration may be set to 13.00% or less, 10.00% or less, or 8.00% or less.

Since the elements to be described below are all optionally added elements except for Fe and Zn, the lower limits thereof are set to 0.00% or more.

<Sn: 0% to 1.00%>

The Sn concentration may be 0.00%. However, Sn is an element that forms an intermetallic compound with Mg and improves the planar corrosion resistance of the plating layer. Therefore, the Sn concentration may be set to 0.05% or more, 0.10% or more, or 0.20% or more. However, when the Sn concentration is excessive, the planar corrosion resistance deteriorates. Therefore, the Sn concentration is set to 1.00% or less. The Sn concentration may be set to 0.80% or less, 0.60% or less, 0.50% or less, 0.20% or less, or 0.06% or less.

<Si: 0% to 2.00%>

The Si concentration may be 0.00%. However, Si contributes to the improvement of planar corrosion resistance. In addition, Si is an element necessary for the crystallization of the $Mg_2Si$ phase. Therefore, the Si concentration may be set to more than 0.00%, 0.01% or more, 0.05% or more, or 0.10% or more. On the other hand, when the Si concentration is excessive, the planar corrosion resistance deteriorates. Therefore, the Si concentration is set to 2.00% or less. The Si concentration may be set to 1.80% or less, 1.50% or less, 1.20% or less, or 1.00% or less.

<Ca: 0% to 2.00%>

The Ca concentration may be 0.00%. However, Ca is an element that can adjust the optimal amount of Mg eluted for imparting the planar corrosion resistance. Therefore, the Ca concentration may be 0.01% or more or 0.02% or more. On the other hand, when the Ca concentration is excessive, the planar corrosion resistance and the workability deteriorate. Therefore, the Ca concentration is set to 2.00% or less. The Ca concentration may be 1.00% or less, 0.50% or less, 0.10% or less, or 0.05% or less.

<Ni: 0% to 1.00%>

The Ni concentration may be 0.00%. However, Ni contributes to the improvement of end surface corrosion resistance. Therefore, the Ni concentration may be set to 0.001% or more. On the other hand, when the Ni concentration is excessive, the planar corrosion resistance deteriorates. Therefore, the Ni concentration is set to 1.00% or less. The Ni concentration may be set to 0.50% or less, 0.10% or less, or 0.01% or less.

<Fe: 0.01% to 15.00%>

The Fe concentration may be 0.00%, but Fe may be mixed into the plating layer from a base steel. Therefore, Fe may be contained in the plating layer in an amount of 0.01% or more. It was checked that, when the Fe concentration is 15.00% or less, there is no adverse influence on the performance of the plating layer. The Fe concentration may be set to, for example, 0.01% or more, 0.10% or more, or 0.50% or more. The Fe concentration is set to 15.00% or less. The Fe concentration may be set to 10.00% or less, 5.00% or less, 2.00% or less, or 1.00% or less.

<Sb, Pb: each 0% to 0.50%>

The concentrations of Sb and Pb may be 0.00%. However, Sb and Pb contribute to the improvement of end surface corrosion resistance. Therefore, the concentration of each of Sb and Pb may be set to 0.01% or more, 0.03% or more, or 0.05% or more. On the other hand, when the Sb or Pb concentration is excessive, the planar corrosion resistance deteriorates. Therefore, the concentration of each of Sb and Pb is set to 0.50% or less. The concentration of each of Sb and Pb may be set to 0.40% or less, 0.20% or less, or 0.10% or less.

<Cu, Ti, Cr, Nb, Zr, Mn, Mo, Ag, and Li: each 0.00% to 1.00%>

The concentration of each of Cu, Ti, Cr, Nb, Zr, Mn, Mo, Ag, and Li may be 0.00%. These contribute to the improvement of end surface corrosion resistance. Therefore, the concentration of each of these elements may be set to 0.01% or more. On the other hand, in a case where the concentration of each of these elements is excessive, the planar corrosion resistance deteriorates. Therefore, the concentration of each of these elements is set to 1.00% or less. The concentration of each of these elements may be set to 0.50% or less, 0.10% or less, 0.05% or less, or 0.03% or less.

<Bi, V, Co, In, and W: each 0.00% to 1.00%>

The concentration of each of Bi, V, Co, In, and W may be 0.00%. Each of these elements contributes to the improvement of end surface corrosion resistance. Therefore, the concentration of each of these elements may be set to 0.001% or more or 0.01% or more. On the other hand, in a case where the concentrations of these elements are excessive, the planar corrosion resistance deteriorates. Therefore, the concentration of each of Bi, V, Co, In, and W is set to 1.00% or less. The concentration of each of these elements may be set to 0.50% or less, 0.10% or less, 0.02% or less, or 0.01% or less.

<P: 0 to 1.00%>

The P concentration may be 0.00%. P contributes to the improvement of end surface corrosion resistance. Therefore, the P concentration may be set to 0.005% or more or 0.01% or more. On the other hand, when the P concentration is excessive, the planar corrosion resistance deteriorates. Therefore, the P concentration is set to 1.00% or less. The P concentration may be set to 0.05% or less, 0.03% or less, or 0.01% or less.

<B, Y, and Sr: each 0% to 0.50%>

The concentration of each of B, Y, and Sr may be 0%. B, Y, and Sr contribute to the improvement of end surface corrosion resistance. Therefore, the concentration of each of these elements may be set to 0.001% or more or 0.01% or more. On the other hand, when the concentrations of B, Y, and Sr are excessive, the planar corrosion resistance deteriorates. Therefore, the concentration of each of these elements is set to 0.50% or less. The concentration of each of these elements may be set to 0.10% or less, 0.02% or less, or 0.01% or less.

<La and Ce: each 0.00% to 0.50%>

The concentrations of La and Ce may be 0.00%. La and Ce contribute to the improvement of end surface corrosion resistance. Therefore, the concentration of each of these elements may be set to 0.01% or more. On the other hand, when the concentrations of La and Ce are excessive, the planar corrosion resistance deteriorates. Therefore, the concentration of each of these elements is set to 0.50% or less. The concentration of each of these elements may be set to 0.10% or less, 0.05% or less, or 0.02% or less. In addition, the total amount of La and Ce may be set to 0.05% to 0.50%.

<Total of Sb, Pb, Cu, Ti, Cr, Nb, Zr, Mn, Mo, Ag, Li, Bi, V, Co, In, W, P, La, Ce, B, Y, and Sr: 0.00% to 5.00%>

The total of these elements is set to 0.00% to 5.00%. When the total exceeds 5.00%, the planar corrosion resistance or the end surface corrosion resistance may decrease.

<Remainder: Zn and impurities>

The remainder of the components of the plating layer according to the present embodiment includes Zn and impurities. Zn is an element that provides planar corrosion resistance and end surface corrosion resistance to the plating layer. Impurities refer to components that are contained in raw materials or components that are mixed in during the manufacturing process and components that are not intentionally contained. For example, in the plating layer, there are cases where a small amount of components other than Fe are mixed in as impurities due to mutual atomic diffusion between the base steel and a plating bath.

**In** addition, in the plating layer according to the present embodiment, the total of Al, Mg, and Zn is preferably 74.00% or more, and may be 80.00% or more, 90.00% or more, 95.00% or more, or 98.00% or more.

The chemical composition of the plating layer is measured using the following method. First, an acid solution is obtained by exfoliating and dissolving the plating layer using an acid containing an inhibitor that suppresses the corrosion of the steel. Next, the obtained acid solution is subjected to ICP analysis. This makes it possible to obtain the chemical composition of the plating layer. The type of acid is not particularly limited as long as the acid is capable of dissolving the plating layer. The chemical composition that is measured by the above-described method is the average chemical composition of the entire plating layer.

<Surface of plating layer>

The surface of the plating layer of the present embodiment is an uneven surface. The roughness of the uneven surface is represented by a relational expression between Lo and Lr as shown in the following expression (1). That is, (Lr - Lo)/Lo × 100 needs to be 2.0% or more. When (Lr - Lo)/Lo × 100 is less than 2.0 (%), the roughness of the uneven surface is small, and the adhesion of the adhesive layer cannot be improved. (Lr - Lo)/Lo × 100 more preferably satisfies the following expression (2), and still more preferably satisfies the following expression (3). Although an upper limit of (Lr - Lo)/Lo × 100 is not particularly necessary, when it is too large, the surface smoothness of the plating layer may decrease, the average thickness of the adhesive layer may become non-uniform, and sufficient bonding performance may not be obtained, and thus, (Lr - Lo)/Lo × 100 may be 40(%) or less, 20(%) or less, or 12(%) or less.

$$(Lr - Lo)/Lo \times 100 \geq 2.0(\%) \qquad (1)$$

$$(Lr - Lo)/Lo \times 100 \geq 6.0(\%) \qquad (2)$$

$$(Lr - Lo)/Lo \times 100 \geq 8.0(\%) \qquad (3)$$

In the cross section of the plating layer, the length Lo in Expressions (1) to (3) is the length of the plating layer in the longitudinal direction in the observation region of the cross section, and Lr is the total length of the contour line of the surface of the plating layer in the observation region. The observation region is an observed visual field when the cross section of the plating layer is observed with a scanning electron microscope, the length of the plating layer in the longitudinal direction that is included in the observed visual field is Lo, and the total length of the contour line of the surface of the plating layer corresponding to the length Lo of the plating layer in the longitudinal direction is Lr. In the measurement of Lo and Lr, it is desirable to set the observed visual field when observed with a scanning electron microscope such that the length Lo of the plating layer in the longitudinal direction is 500 μm. In addition, a plurality of observed visual fields may be combined to synthesize an observed visual field in which the length Lo of the plating layer in the longitudinal direction is 500 μm.

The position where the observed visual field is disposed is spaced apart from an end portion of the plated steel by 5 mm or more. In a case where a welded part is provided in the plated steel, the observed visual field is spaced apart from weld beads by 1 mm or more. Moreover, in a case where the plated steel actually has a bent portion, the observed visual field is spaced apart from the bent portion by 2 mm or more. Accordingly, the influence of cutting, welding, and bending of the plated steel on the surface properties of the plating layer is excluded from the measurement results.

The observed visual field is preferably disposed on a flat point. However, the plated steel may not have a flat point. For example, in a case where the plated steel is used as an exterior component of a vehicle, the plated steel may have an overall loosely-curved shape and may not have a flat point. In this case, it is preferable that the observed visual field be disposed in a region having a radius of curvature of 5 mm or more.

The number of observed visual fields is set to 5. First, $(Lr - Lo)/Lo \times 100$ is calculated in each of the five observed visual fields, and then an arithmetic average value of these values is obtained. This arithmetic average value is regarded as $(Lr - Lo)/Lo \times 100$ of the plated steel.

FIG. 1-3 is a schematic view showing an example of the observed visual field when observed with a scanning electron microscope. FIG. 1-3 shows the relationship between Lo and Lr. In FIG. 1-3, reference numeral 11 denotes a steel, reference numeral 12 denotes a plating layer, and reference numeral 13 denotes an interface alloy layer. Both the double-headed arrow lines of reference signs Lo and Lr schematically represent the lengths of Lo and Lr. In addition, in FIG. 1-3, the uneven surface of the surface of the plating layer is schematically represented.

<Structure of plating layer>

The plating layer of the present embodiment includes one or both of a plurality of blocky binary eutectic structures and a plurality of blocky ternary eutectic structures. The binary eutectic structure is a eutectic structure of an η-Zn phase and an Al-Zn phase, and the ternary eutectic structure is a eutectic structure of an Al phase, a Zn phase, and an $MgZn_2$ phase. These eutectic structures may be structures in which each phase constituting the eutectic structures is aggregated in a lamellar form. That is, the binary eutectic structure may have a lamellar structure in which a lamellar η-Zn phase and a lamellar Al-Zn phase overlap each other. The ternary eutectic structure may have a lamellar structure in which a lamellar Al phase, a lamellar Zn phase, and a lamellar $MgZn_2$ phase overlap each other.

In addition to these eutectic structures, the plating layer contains a blocky Al phase, an Al-Zn phase, a Zn phase, a $MgZn_2$ phase, and the like. In addition, an eutectoid structure including a lamellar Zn phase and a lamellar Al phase may be formed in the plating layer. This eutectoid structure has a lamellar structure, but does not correspond to a binary eutectic structure or a ternary eutectic structure.

In the plating layer of the present embodiment, at least some of a plurality of blocky binary eutectic structures or ternary eutectic structures are continuously present from the surface of the plating layer to a position at 1/2 of the average thickness of the plating layer. On the surface of the plating layer, at least some of the blocky binary eutectic structures or the blocky ternary eutectic structures are exposed to the surface of the plating layer. The binary eutectic structure or the ternary eutectic structure has excellent adhesion to the adhesive layer compared to other phases such as the Al phase and the Al-Zn phase. Therefore, the adhesion of the entire plating layer to the adhesive layer is improved by exposing the binary eutectic structure or the ternary eutectic structure to the surface of the plating layer.

In addition, in a case where cracks are generated in the plating layer during the processing of the plated steel, the generated cracks often propagate along a boundary surface between the binary eutectic structure or the ternary eutectic structure and the other phases or structures. In the present embodiment, at least some of the binary eutectic structures or ternary eutectic structures are continuously present up to a position at 1/2 of the average thickness of the plating layer. Therefore, cracks generated due to bending propagate from the surface of the plating layer toward the steel side, and are less likely to propagate in a direction parallel to the surface of the plating layer. Therefore, even in a case where cracks are generated, the eutectic structure does not easily fall off from the plating layer, and powdering or flaking is suppressed. Accordingly, even in a case where the plating layer is processed, the coating adhesion of the plating layer does not decrease.

The plating layer of the present embodiment is more preferably such that at least some of the plurality of blocky binary eutectic structures or ternary eutectic structures are continuously present from the surface of the plating layer to the Fe-Al-based interface alloy layer. Accordingly, the occurrence of powdering or flaking is further suppressed, and the adhesion of the plating layer to the adhesive layer is further improved.

FIG. 1-4 is an enlarged schematic view of an example of the plating layer of the present embodiment. In FIG. 1-4, the uneven surface of the plating layer is schematically represented, and the presence state of binary eutectic structures or ternary eutectic structures is shown. The hatched portions in the figure are the binary eutectic structures or ternary eutectic structures. In FIG. 1-4, reference numeral 11 denotes a steel, reference numeral 12 denotes a plating layer, reference numeral 13 denotes an interface alloy layer, and reference numeral 14 denotes binary eutectic structures or ternary eutectic structures.

As shown in FIG. 1-4, it can be seen that the binary eutectic structures or ternary eutectic structures 14 are continuous from the surface of the plating layer 12 toward the steel 11 side. It can be seen that the binary eutectic structures or ternary eutectic structures 14 are continuously present up to the Fe-Al-based interface alloy layer 13 on the steel side of the plating layer 12. FIG. 1-4 shows an example in which most of the binary eutectic structures or ternary eutectic structures 14 are continuous up to the Fe-Al-based interface alloy layer 13 on the steel 11 side of the plating layer 12. However, the present embodiment is not limited thereto, and may include the binary eutectic structures or ternary eutectic structures 14 continuous up to the 1/2 position of the plating layer 12.

For reference, a cross-sectional schematic view of a plating layer in the related art is shown in FIG. 1-5. In a plating layer 112 in the related art, the surface of the plating layer is flat, and binary eutectic structures or ternary eutectic structures 114 are distributed in the vicinity of an interface alloy layer 113 of the plating layer 112 or near the surface of the plating layer, and no binary eutectic structure or ternary eutectic structure 114 continuous up to the 1/2 position of the plating layer 112 is found.

In addition, the surface of the plating layer 12 of the present embodiment is an uneven surface as illustrated in FIGS. 1-3 and 1-4, and the binary eutectic structures or ternary eutectic structures 14 continuously present up to the 1/2 depth of the average thickness of the plating layer 12 are present in many recessed parts of the uneven surface as shown in FIG. 1-4. This is because, as will be described below, the binary eutectic structures or the ternary eutectic structures are crystallized in the latter half of the solidification process of the plating layer. As the binary eutectic structures or the ternary eutectic structures are present in concentration in the recessed parts, the coating adhesion can be enhanced in combination with the shape effect of the uneven surface.

In addition, in the present embodiment, the binary eutectic structures or the ternary eutectic structures continuously present from the surface of the plating layer to the Fe-Al-based interface alloy layer may be present in recessed parts of the uneven surface in a large amount.

As described below in the description of the manufacturing method, the binary eutectic structures or the ternary eutectic structures begin to crystallize after the Al phase or the Al-Zn phase is crystallized. It is considered that the crystallization of these eutectic structures begins from the nucleation on the region of the plating layer on the steel side, more specifically, on the surface of the Fe-Al-based interface alloy layer as a base point. It is also considered that the crystallization of the eutectic structures progresses toward the surface of the plating layer. Therefore, it is considered that many of the binary eutectic structures or the ternary eutectic structures according to the present embodiment are continuously present from the surface of the plating layer to the Fe-Al-based interface alloy layer.

However, in a case where the internal structure of the plating layer is observed at an optional cross section, all of the binary eutectic structures or the ternary eutectic structures are not always observed in a continuous form from the surface of the plating layer to the Fe-Al-based interface alloy layer. This is because the individual shapes of the blocky binary eutectic structures or ternary eutectic structures are indefinite shapes, and thus the forms of the binary eutectic structures may appear differently depending on the position of the cross section.

According to the present inventors' investigations, it is presumed that in a case where at least some of the plurality of blocky binary eutectic structures or ternary eutectic structures are continuously present from the surface of the plating layer to a position at 1/2 of the average thickness of the plating layer at least in the cross section of the plating layer, there is a high probability that most of the binary eutectic structures or the ternary eutectic structures are present in a continuous form from the surface of the plating layer to the Fe-Al-based interface alloy layer, which improves the coating adhesion.

In the present embodiment, the number of points where the binary eutectic structures or the ternary eutectic structures are continuously present from the surface of the plating layer to a position at 1/2 of the average thickness of the plating layer is preferably 1 to 15 points per rectangular region of 500 $\mu$m in a long side and 150 $\mu$m in a short side on the surface of the plating layer. When the number of points is less than one point, the coating adhesion is insufficient, which is not preferable. In addition, in a case where the above expression (2) is satisfied, the number of points is preferably 3 to 15. Moreover, in a case where the above expression (3) is satisfied, the number of points is preferably 5 to 15.

The presence of the binary eutectic structures or the ternary eutectic structures is checked as follows.

On the surface of the plating layer, a rectangular region having a long side of 500 $\mu$m and a short side of 150 $\mu$m is set. The position where the region is disposed is determined by the same method as the above-described observed visual field for evaluating the roughness of the uneven surface of the plating layer.

Within the region, the number and positions of binary eutectic structures or ternary eutectic structures exposed to the surface of the plating layer are checked. Next, the surface of the plating layer including the region is sequentially ground to the 1/4-position depth, 1/2-position depth, 3/4-position depth, and 9/10-position depth of the average thickness of the plating layer, and is further mirror-polished to be an observed section. Then, in each of the 1/4-position depth, the 1/2-position depth, the 3/4-position depth, and the 9/10-position depth, the number and positions of binary eutectic structures or ternary eutectic structures in the observed section at each depth are checked. In addition, the number of the binary eutectic structures or the ternary eutectic structures appearing at the same position is counted on all of the surface, the 1/4-position depth, and the 1/2-position depth of the plating layer. Whether or not the structures appear at the same position can be regarded as appearing at the same position when the eutectic structures appear in the projected range of a radius of 15 μm from the centroid of the eutectic structures on the surface of the plating layer. The binary eutectic structures or the ternary eutectic structures appearing at the same position are determined to be continuously present from the surface of the plating layer to a position at 1/2 of the average thickness of the plating layer. The method for the grinding is not particularly limited, and examples thereof include precision mechanical processing such as polishing and focused ion beam (FIB) processing.

Moreover, it is checked whether or not the binary eutectic structures or the ternary eutectic structures appearing at the same position are present on all of the surface, the 1/4-position depth, the 1/2-position depth, the 3/4-position depth, and the 9/10-position depth of the plating layer. As a result, the binary eutectic structures or the ternary eutectic structures appearing at the same position are specified to be continuously present from the surface of the plating layer to the Fe-Al-based interface alloy layer.

The average thickness of the plating layer is an average thickness of the plating layer in the rectangular region having a long side of 500 μm and a short side of 150 μm.

Then, a position at a height equivalent to the average thickness of the plating layer from the position of the interface between the steel and the plating layer is estimated as the average surface position of the plating layer, and the 1/4-position depth, the 1/2-position depth, the 3/4-position depth, and the 9/10-position depth of the average thickness of the plating layer are determined with the estimated surface position as a reference.

In addition, to check the presence of the binary eutectic structures or the ternary eutectic structures, in a case where there is a portion of the adhesively joined structure that is not bonded to the plated steel and where the plating layer is exposed, the portion may be cut out, for example, to create a sample for checking the presence.

In addition, in a case where the entire surface of the plated steel is bonded in the adhesively joined structure, the plating layer may be exposed, for example, by separating the bonded portion carefully, and a sample for checking the presence may be created, for example, by cutting out the portion.

In a case where the plating layer contains 0.05% to 0.5% of Sn, it is preferable that the $Mg_2Sn$ phase be contained in the plating layer. Since the amount of the $Mg_2Sn$ phase is small, the presence of the $Mg_2Sn$ phase is detected and checked by X-ray diffraction measurement using a θ-2θ method. The end surface corrosion resistance of the plating layer is further improved by containing the $Mg_2Sn$ phase in the plating layer. The X-ray diffraction measurement in the detection of the $Mg_2Sn$ phase may be performed by a θ-2θ measurement method.

The adhesion amount per one surface of the plating layer may be, for example, within a range of 20 to 200 g/$m^2$. When the adhesion amount per one surface is set to 20 g/$m^2$ or more, it is possible to further enhance the planar corrosion resistance and the end surface corrosion resistance of the plated steel. On the other hand, when the adhesion amount per one surface is set to 200 g/$m^2$ or less, it is possible to further enhance the workability of the plated steel.

<<Film portion 22>>

Next, the film portion 22 will be described.

The plated steel 21 according to the present embodiment may have the film portion 22 disposed in at least part of the plating layer. Hereinafter, the film portion 22 will be described with reference to FIGS. 2-1 and 2-2.

FIG. 2-1 is an enlarged schematic view showing the bonding region of the adhesively joined structure shown in FIG. 1-1, and is a schematic view illustrating the positional relationship between the film portion 22, the adhesive layer 4, the first member 2, and the second member 3, and an organic compound phase contained in the film portion 22.

FIG. 2-1 shows a state in which the film portion 22 is formed on at least part of the surface of the plating layer of the plated steel 21. At least part of the film portion 22 is in contact with the adhesive layer 4, and the first member 2 is bonded to the second member 3 by the adhesive layer 4 via the film portion 22. The film portion 22 includes an organic resin phase containing at least one of a urethane group, an epoxy group, or an ester group and an organic compound phase formed of an organic silicon compound. The organic silicon compound of the present embodiment includes a Si-C bond. In addition, the organic silicon compound of the present embodiment includes at least one of a Si-O bond or a Si-OH bond. That is, the organic silicon compound of the present embodiment includes a Si-C bond and at least one of a Si-O bond or a Si-OH bond. Hereinafter, the configuration of the film portion 22 will be described in detail.

As described above, the film portion 22 according to the present embodiment includes the organic resin phase containing one or more of the urethane group, the epoxy group, and the ester group, and the organic compound phase formed of the organic silicon compound. More specifically, as schematically shown in FIG. 2-1, in the film portion 22, the above organic resin phase having a specific functional group is mainly present as resin particles 221 and has a structure in which such resin particles 221 are dispersed in an organic compound phase 223 composed of an organic silicon compound. The second member 3 has, for example, a plated steel 31 and a film portion 32, and in the film portion 32, similarly to the film portion 22, resin particles 321 are dispersed in an organic compound phase 323.

Since the organic compound phase 223 formed of the organic silicon compound is present in the film portion 22, a chemical bond referred to as a Si-O-Me bond is formed between the elements constituting the plating layer 12 of the plated steel 21. Here, Me is a metal element, that is, Zn, Al, Mg, or Fe, which is a main component of the plating layer 12. By forming such a primary bond, a joined state between the plating layer 12 of the plated steel 21 and the film portion 22 becomes stronger, and the adhesion between the plating layer 12 and the film portion 22 is further improved. As a result, a state in which water does not easily enter the interface between the plating layer 12 and the film portion 22 from the outside is realized. Accordingly, in the adhesively joined structure 1 according to the present embodiment, the bonding durability between the plated steel 21 and the adhesive layer 4 can be improved.

In the film portion 22, it is preferable that the total volume percentage of the organic compound phase 223 and an inorganic compound phase be 16 vol% to 84 vol% with respect to the total volume of the film portion 22. When the total volume percentage of the organic compound phase 223 and the inorganic compound phase is 16 vol% or more with respect to the total volume of the film portion 22, the Si-O-Me bond is sufficiently formed. When the volume percentage of the organic compound phase 223 and the inorganic compound phase is 84 vol% or less with respect to the total volume of the film portion 22, the adhesion between the adhesive layer 4 and the film portion 22 is further improved. The total volume percentage of the organic compound phase 223 and the inorganic compound phase is preferably 20 vol% or more and more preferably 30 vol% or more. The total volume percentage of the organic compound phase 223 and the inorganic compound phase is preferably 80 vol% or less and more preferably 70 vol% or less. In a case where the total volume percentage of the organic compound phase 223 and the inorganic compound phase is determined from the cross section of the film portion 22, the total area percentage of the organic compound phase 223 and the inorganic compound phase with respect to the cross-sectional area of the film portion 22 is determined to be the total volume percentage of the organic compound phase 223 and the inorganic compound phase.

In the film portion 22, it is preferable that the volume percentage of the organic compound phase 223 be 16 vol% to 84 vol% with respect to the total volume of the film portion 22. When the total volume percentage of the organic compound phase 223 is 16 vol% or more with respect to the total volume of the film portion 22, the Si-O-Me bond is sufficiently formed. When the volume percentage of the organic compound phase 223 is 84 vol% or less with respect to the total volume of the film portion 22, the adhesion between the adhesive layer 4 and the film portion 22 is further improved. The volume percentage of the organic compound phase 223 is preferably 20 vol% or more and more preferably 30 vol%. The volume percentage of the organic compound phase 223 is preferably 80 vol% or less and more preferably 70 vol%. In a case where the volume percentage of the organic compound phase 223 is determined from the cross section of the film portion 22, the area percentage of the organic compound phase 223 with respect to the cross-sectional area of the film portion 22 is determined to be the volume percentage of the organic compound phase 223.

The film portion 22 may contain an inorganic compound phase formed of an inorganic silicon compound. The volume percentage of the inorganic compound phase may be 10 vol% or less with respect to the total volume of the film portion 22. When the volume percentage of the inorganic compound phase is 10 vol% or less, the adhesion between the metal portion 21 and the film portion 22 is further increased. Since the film portion 22 may not contain the inorganic compound phase, the lower limit thereof is 0 vol%. In a case where the film portion 22 contains the inorganic compound, the strength of the film portion 22 is improved. Therefore, the bonding strength is improved. Examples of the inorganic silicon compound constituting the inorganic compound phase include colloidal silica, fumed silica, and the like. In a case where the volume percentage of the inorganic compound phase is determined from the cross section of the film portion, the area percentage of the inorganic compound phase with respect to the cross-sectional area of the film portion 22 is determined to be the volume percentage of the inorganic compound phase. The inorganic silicon compound is determined from the constituent elements thereof, for example, by performing elemental analysis with an electron probe microanalyzer (EPMA) in the cross section of the film portion. The volume percentage of the inorganic silicon compound or the organic silicon compound is determined from the obtained SEM image by observing the cross section with an electron scanning microscope (SEM) after the elemental analysis.

In addition, in the film portion 22, the resin particles 221 are dispersed in the organic compound phase 223, and the resin particles 221 have one or more functional groups among the urethane group, the epoxy group, and the ester group. These functional groups are functional groups that are contained in a large amount even in the resin constituting the adhesive. Therefore, the film portion 22 containing the resin particles 221 having the functional groups described above improves the adhesion at the interface between the film portion 22 and the adhesive layer 4. As a result, a state in which water does not easily enter the interface between the film portion 22 and the adhesive layer 4 from the outside is realized. Accordingly, in the adhesively joined structure 1 according to the present embodiment, the bonding durability between the film portion 22 and the adhesive layer 4 can be improved.

As described above, as the film portion 22 contains the organic resin phase and the organic compound phase 223, the adhesion on the two interfaces (the interface between the film portion 22 and the metal portion 21 and the interface between the film portion 22 and the adhesive layer 4) in the film portion 22 can be improved, and the bonding durability of the adhesively joined structure 1 can be improved.

Here, the resin particles 221 constituting the organic resin phase described above are not particularly limited as long as the resin particles are resin particles having one or more functional groups among the urethane group, the epoxy group, and the ester group. The resin particles 221 may be either a water-dispersible water-based resin which is dispersible in water or a solvent-based resin which is dispersible in an organic solvent. However, the resin particles 221 are preferably the water-based resin from the viewpoints of manufacturing cost and environmental suitability. The resin constituting the resin particles 221 is preferably a resin having a main chain containing carbon atoms.

Examples of the water-based resin include water-dispersible resins such as urethane resins, epoxy resins, polyester resins, and mixed resins of two or more kinds of these resins. In a case where the polyester resin is used, the molecular weight is preferably 10,000 to 30,000. When the molecular weight is less than 10,000, it may be difficult to ensure sufficient workability. On the other hand, when the molecular weight exceeds 30,000, the binding sites of the resin itself may decrease, and it may become difficult to ensure excellent adhesion to the adhesive layer 4. In addition, in a case where crosslinking is made using a hardening agent such as melamine, the crosslinking reaction may not be sufficiently performed and the performance of the film portion 22 may deteriorate. In the case of a urethane resin, the form of the urethane resin is preferably an emulsion having an emulsion particle size of 10 to 100 nm (preferably 20 to 60 nm). In a case where the emulsion particle size is excessively small, the cost may be high. On the other hand, in a case where the emulsion particle size is excessively large, a gap between the emulsions becomes large when a coating film is applied. Therefore, the barrier property of the film portion 22 may decrease. Examples of the type of urethane resin include ether-based, polycarbonate-based, ester-based, and the like. These may be used alone or in combination.

On the other hand, examples of the solvent-based resin include polyester resins, urethane resins, epoxy resins, and mixed resins of two or more kinds of these resins.

Here, the resin contained in the film portion 22 may be a crosslinked resin having a crosslinked structure or a non-crosslinked resin having no crosslinked structure. As a crosslinking agent (hardening agent) that imparts a crosslinked structure to the resin, melamine, isocyanate, silane compound, zirconium compound, titanium compound and the like are preferable.

The amount of the crosslinking agent added is preferably 5 parts by mass to 30 parts by mass with respect to 100 parts by mass of the resin solid content. When the amount of the crosslinking agent added is less than 5 parts by mass, the crosslinking reaction with the resin decreases, and the performance as a coating film may be insufficient. On the other hand, when the amount of the crosslinking agent added is more than 30 parts by mass, the crosslinking reaction proceeds too much, the film portion 22 may become excessively hard, and the workability may deteriorate. In addition, in a case where the silane compound, the zirconium compound, or the titanium compound is used as the crosslinking agent, the coating stability may further deteriorate when the amount of the crosslinking agent added is more than 30 parts by mass, which is not preferable.

The particle shape of the resin particles 221 is not particularly limited and may be, for example, a sphere-like shape such as a spherical shape, a pseudo-spherical shape (for example, an elliptical spherical shape, a chicken egg shape, a rugby ball shape, or the like), a polyhedral shape (for example, a soccer ball shape, a dice shape, brilliant-cut shapes of various jewels), an elongated shape (for example, a rod shape, a needle shape, a fibrous shape, or the like), or a planar shape (for example, a flake shape, a flat plate shape, a sheet shape, or the like).

In the film portion 22 according to the present embodiment, the average particle size of the resin particles 221 is preferably 20 nm or more, for example. As the average particle size of the resin particles 221 is 20 nm or more, the affinity with the adhesive layer 4 described above can be more reliably improved, which is preferable. The average particle size of the resin particles 221 is more preferably 30 nm or more and much more preferably 50 nm or more. On the other hand, as the average particle size of the resin particles 221 is less than 200 nm, it is possible to form a more dense resin barrier layer, and thereby further improve the adhesion between the film portion 22 and the adhesive layer 4, which is preferable. The average particle size of the resin particles 221 is more preferably 180 nm or less and much more preferably 150 nm or less.

Here, the "average particle size" of the resin particles 221 means the average primary particle size in a case where the resin particles 221 present in the film portion 22 are present alone and means the average secondary particle size representing the particle size of the resin particles at the time of cohesion in a case where the resin particles 221 cohere. The average particle size of the resin particles 221 is preferably determined by the following measurement method.

First, by cutting the part of the adhesively joined structure 1 on which the film portion 22 is disposed, the cross section of the part is exposed, the cross section of the part is further polished, and a cross-sectional sample in the thickness direction of the first member 2 of the film portion 22 is obtained. Next, the portion of the film portion 22 of the cross-sectional sample is observed with a scanning electron microscope to obtain an observation image of the cross section of the film portion 22. Ten resin particles 221 present in the visual field of the observation image are optionally selected, and a diameter equivalent to the area circle of each resin particle 221 is measured. The diameter equivalent to the area circle of the resin particles 221 is the average of 10 resin particles 221.

Here, whether or not the film portion 22 according to the present embodiment has at least one of the urethane group, the epoxy group, or the ester group can be determined by the following method. In addition, similarly, whether or not the Si-C bond and at least one of the Si-O bond or the Si-OH bond is contained can be determined by the following method.

First, by cutting the part of the adhesively joined structure 1 on which the film portion 22 is disposed by diagonal cutting, the cross section of the part is exposed, the cross section of the part is further polished, and a cross-sectional sample in the thickness direction of the first member 2 of the film portion 22 is obtained. Next, the portion of the film portion 22 of the cross-sectional sample is analyzed by a micro-IR spectroscope, and determination is made on the basis of whether or not a vibration peak derived from the urethane group, the epoxy group, the ester group, the Si-O bond, the Si-C bond, or the Si-OH bond is observed on the infrared absorption spectrum of the obtained film portion 22. Specifically, in the obtained infrared absorption spectrum, the epoxy group is determined to be contained in a case where a peak is observed in the vicinity of 910 $cm^{-1}$, the urethane group is determined to be contained in a case where a peak is observed in the vicinity of 1550 $cm^{-1}$ and in the vicinity of 1740 $cm^{-1}$, and the ester group is determined to be contained in a case where a peak is observed in the vicinity of 1720 to 1740 $cm^{-1}$. The Si-C bond is determined to be included in a case where a peak is observed in the vicinity of 1250 to 1260 $cm^{-1}$, the Si-O bond is determined to be included in a case where a peak is observed in the vicinity of 1000 to 1100 $cm^{-1}$, and the Si-OH bond is determined to be included in a case where a peak is observed in the vicinity of 3650 to 3690 $cm^{-1}$. As long as the film portion 22 can be sufficiently enlarged, the cutting angle in diagonal cutting may be any angle.

In addition, in the cross section taken in the thickness direction of the film portion 22 according to the present embodiment (for example, in the cross section as shown in FIG. 3), it is preferable that the area percentage of the resin particles 221 occupy 16% or more of the cross-sectional area of the film portion 22. That is, in the above cross section, the area percentage of the resin particles 221 is preferably 16% or more with respect to the cross-sectional area of the film portion 22. As the area percentage of the resin particles 221 is 16% or more, it is possible to more reliably improve the affinity with the adhesive layer 4 described above. The area percentage of the resin particles 221 in the cross section of the film portion 22 is more preferably 30% or more and much more preferably 40% or more. On the other hand, as the area percentage of the resin particles 221 in the cross section is 84% or less, the affinity between the film portion 22 and the adhesive layer 4 can be further improved while reliably maintaining the adhesion between the film portion 22 and the metal portion 21. The area percentage of the resin particles 221 in the cross section of the film portion 22 is more preferably 80% or less and much more preferably 70% or less.

The area percentage of the resin particles 221 in the cross section of the film portion 22 is preferably determined by the following measurement method. First, by cutting the part of the adhesively joined structure 1 on which the film portion 22 is disposed, the cross section of the part is exposed, the cross section of the part is further polished, and a cross-sectional sample in the thickness direction of the first member 2 of the film portion 22 is obtained. Next, a thin film sample for TEM observation is produced from the portion of the film portion 22 of the cross-sectional sample by an FIB-microsampling method and a cryo-FIB-microsampling method, and the obtained thin film sample for TEM observation is observed by using an FE-TEM capable of analyzing a minute region. Five points obtained by dividing the film portion 22 of the cross-sectional sample into 5 equal parts in the width direction are observed. At the respective observation points, EDS analysis (element mapping) is performed on the cross section in the vicinity of the interface between a metal portion and an adhesive layer to obtain respective element maps of C, O, and Si. Then, the obtained element maps are binarized for C and other elements, and the average particle sizes and the area percentages of the resin particles in the film portion are calculated.

In addition, the organic compound phase 223 according to the present embodiment is not particularly limited as long as an organic silicon compound containing the Si-C bond and at least one of the Si-O bond or the Si-OH bond is provided. For example, it is preferable to use an organic silicon compound having a glycidoxy group or a mercapto group. By using the organic silicon compound having the glycidoxy group or the mercapto group as the organic silicon compound, it is possible to realize the formation state of the Si-O-Me bond as described in detail below in a more reliable and more preferable state, and it is possible to more reliably realize long-term bonding durability. In addition to the organic silicon compound having the glycidoxy group or the mercapto group, for example, an organic silicon compound having an amino group, a vinyl group, a methacryl group, or the like may be present in the organic silicon compound. However, as a result of verification by the present inventors, in a case where the organic silicon compound having the amino group, the vinyl group, the methacryl group, or the like is used, it was clarified that the reaction between the organic silicon compound and the resin constituting the organic resin phase inside the film portion 22 is further promoted than the reaction at the interface between the metal portion 21 and the film portion 22 and it is difficult to obtain the long-term bonding durability. Therefore, from the viewpoint of realizing the long-term bonding durability by preventing an electrolytic solution such as water entering, it is preferable to use the organic silicon compound having the glycidoxy group or the mercapto group. As the organic silicon compound having the glycidoxy group or the mercapto group, a commercially available organic silicon compound that meets the conditions may be used, or an organic silicon compound produced by organic synthesis may be used.

Here, in the film portion 22 according to the present embodiment, it is preferable that the following analysis results be obtained when the film portion is analyzed by time-of-flight secondary ion mass spectrometry (TOF-SIMS) while the film portion 22 is Ar-sputtered from the adhesive layer 4 side toward the plating layer 12 side to include an optional point of the interface between the plating layer 12 of the plated steel 21 and the film portion 22. That is, in the analysis results of TOF-SIMS, peaks corresponding to Si-O-Me bonds (Me: Zn, Al, Mg, and Fe constituting the plating layer 12) are observed, and a count value of the peaks indicating the Si-O-Me bonds is preferably 15 or more.

In addition, the intensity (a.u.) is preferably $1.0 \times 10^{-3}$ or more as a total ion correction value (a value obtained by dividing the peak count number of Si-O-Me bonds by the total value of detected total secondary ion count numbers). Specifically, the value obtained by dividing the count value of the peaks indicating the Si-O-Me bonds by the total value of all the secondary ion count numbers detected in a mass scan range m/z = 0 to 300 (total Ion correction value) is preferably $1.0 \times 10^{-3}$ or more.

Here, the peaks corresponding to the Si-O-Me bonds are observed at a characteristic position for each element Me depending on the specific type of element Me. For example, in the case of Me = Fe, typical peaks corresponding to Si-O-Fe bonds are peaks observed at the position of mass (m/z) 100 ± 0.1 in the analysis result of TOF-SIMS, in the case of Me = Zn, typical peaks corresponding to Si-O-Zn bonds are peaks observed at the position of the mass (m/z) 108 ± 0.1 in the analysis result of TOF-SIMS, and in the case of Me = Al, typical peaks corresponding to Si-O-Al bonds are peaks observed at the position of the mass (m/z) 71 ± 0.1 in the analysis result of TOF-SIMS, and in the case of Me = Mg, typical peaks corresponding to Si-O-Mg bonds are peaks observed at the position of the mass (m/z) 68 ± 0.1 in the analysis result of TOF-SIMS.

Such analysis results show that the formation reaction of the Si-O-Me bond proceeds efficiently at the interface between the plating layer 12 and the film portion 22, and a certain amount or more of Si-O-Me bonds are generated at the interface between the plating layer 12 and the film portion 22. As a certain amount or more of Si-O-Me bonds are generated at the interface between the plating layer 12 and the film portion 22, even in a case where the adhesively joined structure 1 is exposed to a wet environment, water can be prevented from entering the interface between the plated steel 21 and the film portion 22, and longer-term bonding durability is maintained.

The count value indicating the Si-O-Me bonds described above is more preferably 20 or more and much more preferably 30. The total ion correction value is more preferably $1.3 \times 10^{-3}$ or more and much more preferably $2.0 \times 10^{-3}$.

In addition, the count value of the peaks corresponding to the Si-O-Me bonds at the interface between the plating layer 12 and the film portion 22 described above can be measured as follows. First, by cutting an adhesively joined portion between the plating layer 12 and the film portion 22 from the adhesive layer 4 side toward the plating layer 12 side at an inclination of 5 degrees with an oblique cutting device (SAICAS) and by using the Ar sputtering in combination, a sample in which the thickness of an adhesive layer is reduced to about 1 μm is produced. The portion where the thickness of the adhesive layer is reduced to about 1 μm is analyzed by TOF-SIMS from the adhesive layer side toward the plating layer 12 side while performing the Ar sputtering. TOF-SIMS measurement is performed after the sputtering from the surface to a certain depth with an Ar beam, and then similarly, TOF-SIMS measurement is repeated after the Ar sputtering, and the distribution in the depth direction is acquired for various elements and bonds. The primary ion species is $Au_3^+$, the acceleration voltage is 30 kV, the sputtering rate is about 80 nm/min ($SiO_2$ conversion), and the measurement region is 50 μm × 50 μm.

Since a specific mass number is present in each ion, the depth profile of the theoretical mass number of a desired Si-O-Me bond is measured in the above TOF-SIMS measurement. From the depth profile of the mass corresponding to the Si-O-Me bond, and respective depth profiles of Me ions, which are a main component of the metal portion, and C ions, which are a main component of the resin, the part from a rising portion of the count value of the Me ions and a falling portion of the count value of the C ions to the part where the count number of the C ions is substantially constant is regarded as an interface portion, and a count value corresponding to the Si-O-Me bond in such an interface portion is measured.

The area percentage of the resin particles 221 and the count value of the Si-O-Me bonds in TOF-SIMS described above can be desired ranges by appropriately adjusting the selection and content of a material serving as a raw material of the organic resin phase and a material serving as a raw material of the organic compound phase 223 and appropriately controlling the surface state of the plating layer 12 when the film portion 22 according to the present embodiment is formed.

<<Other components>>

The film portion 22 may contain other additives in addition to the above. Examples of other additives include well-known additives such as oxide particles, extender pigments, solid lubricants, antirust agents, leveling agents, viscosity-imparting agents, pigment sedimentation inhibitors, and defoamers.

<<Average thickness of film portion 22>>

In the present embodiment, the average thickness of the film portion 22 described above is preferably 0.2 μm or more per side of the first member 2 (in other words, per side of the plated steel 21). By setting the average thickness of the film portion 22 per side to 0.2 μm or more, the above-described effects by providing the film portion 22 can be more reliably realized. The average thickness of the film portion 22 per side is more preferably 0.4 μm or more and much more preferably

0.5 μm or more. On the other hand, by setting the average thickness of the film portion 22 per side to 1.5 μm or less, it is possible to guarantee the conductivity to the plating layer 12 via the film portion 22. For example, it is possible to perform electrodeposition coating on the plating layer 12 via the film portion 22 and perform spot welding on the plating layer 12 via the film portion 22. The average thickness of the film portion 22 per side is more preferably 1.2 μm or less and much more preferably 1.0 μm or less.

The average thickness of the film portion 22 can be measured as follows. First, by cutting the part of the adhesively joined structure 1 on which the film portion 22 is disposed in the thickness direction of the film portion 22, the cross section of the part is exposed, the cross section of the part is further polished, and a cross-sectional sample in the thickness direction of the first member 2 of the film portion 22 is obtained. Next, the portion of the film portion 22 of the cross-sectional sample is observed with a scanning electron microscope to obtain an observation image of the cross section of the film portion 22. The thicknesses of the film portion 22 present in the visual field of the observation image are measured at the positions of five points where the visual field is divided into five equal parts in the width direction, and an average value thereof is calculated. The average thickness of the film portion 22 is the average value of the values obtained in the five visual fields. That is, the average thickness of the film portion 22 is the average value of the thicknesses at 25 points in total.

A known chemical conversion treatment film may be formed in the part of the above-described first member 2 that does not come into contact with the adhesive layer 4.

FIG. 2-2 is a partially enlarged cross-sectional view of the bonding region of the adhesively joined structure shown in FIG. 1-1, and is an enlarged cross-sectional view showing the forms of the plating layer 12 of the plated steel 21 (first member 2), the film portion 22, and the adhesive layer 4.

As shown in FIG. 2-2, the thickness of the film portion 22 is small with respect to the irregularities on the surface of the plating layer 12, and the recessed parts of the uneven surface are not completely buried by the film portion 22, and the form of the surface of the film portion 22 reflects the irregularities on the surface of the plating layer 12. In a case where the adhesive layer 4 is further laminated on the film portion 22, the adhesive layer 4 penetrates into the recessed parts on the surface of the plating layer 12. Accordingly, a so-called anchor effect is exhibited, and the bonding strength of the adhesive layer 4 is further increased.

<Second member 3>

In the present embodiment, the second member 3 may be the same as the first member 2. That is, the second member 3 may have the above steel 11 and the above plating layer 12 disposed on part of the surface of the steel 11, and may further have the film portion 22.

In addition, the second member 3 may be formed of a hot-dip galvannealed steel. In this case, the adhesive layer is joined to the surface of the hot-dip galvannealed layer of the hot-dip galvannealed steel. In addition, in a case where the second member 3 is formed of the hot-dip galvannealed steel, the film portion 22 may be disposed on the surface of the hot-dip galvannealed layer. In this case, the adhesive layer is joined to the surface of the hot-dip galvannealed layer via the film portion 22. The hot-dip galvannealed steel is one in which a steel is zinc-plated and then alloyed and iron is diffused during the zinc plating, the decrease in strength of the adhesive over time is further suppressed. Therefore, the steel is more suitable as the second member 3.

When the plating layer of the hot-dip galvannealed steel is a hot-dip galvannealed layer containing Fe: 7 to 15% by mass and Al: 0.05 to 0.5% by mass and the remainder formed of Zn and impurities, the bonding strength of the adhesive does not easily decrease over time, and the steel is more suitable as the second member 3. In the present embodiment, the hot-dip galvannealed layer is a plating layer mainly formed of an Fe-Zn alloy in which Fe in steel can be diffused during the Zn plating by an alloying reaction. The content of Fe is not particularly limited. However, when the content of Fe in the hot-dip galvannealed layer is less than 7% by mass, a soft Zn-Fe alloy is formed on the plated surface and deteriorates the press formability. When the content of Fe exceeds 15% by mass, a brittle alloy layer develops excessively at a base steel interface and the plating adhesion deteriorates. For that reason, the content of Fe in the hot-dip galvannealed layer is appropriately 7 to 15% by mass. In addition, when hot-dip galvanizing is generally continuously performed, Al is added to a plating bath for the purpose of controlling the alloying reaction in the plating bath. Therefore, 0.05 to 0.5% by mass of Al is contained in the plating. In addition, in the alloying process, the elements added to the steel are also diffused simultaneously with the diffusion of Fe. Therefore, these elements are also included in the plating.

**In** addition, the second member 3 may be formed of a fiber-reinforced plastic material. In this case, the second member 3 may not have the above-described film portion 22. FIG. 3 is an enlarged schematic view of a cross section of an adhesively joined structure formed of a second member having no film portion 22 and a first member having the film portion 22. FIG. 3 is a schematic view illustrating the positional relationship between a film portion 22A, an adhesive layer 4A, a first member 2A, and a second member 3A, and an organic compound phase included in the film portion 22A.

An adhesively joined structure 1A shown in FIG. 3 has the first member 2A and the second member 3A, and the first member 2A and the second member 3A are bonded to each other by the adhesive layer 4A. The first member 2A has a plated steel 21A and a film portion 22A formed on the surface of a plating layer of the plated steel 21A. The film portion 22A has the resin particles 221 and the organic compound phase 223. In addition, the second member 3A is bonded to the first member 2A via the adhesive layer 4A. And, unlike the above-described embodiment, the second member 3A does not have the film portion 32.

The fiber-reinforced plastic material which is the second member 3A in this case is made of fiber-reinforced plastics (FRP) in which reinforcing fibers are contained in a matrix resin to form a composite. Examples of the reinforcing fibers used in the fiber-reinforced plastics include glass fiber, carbon fiber, and the like.

Moreover, the second member 3 may be an aluminum alloy material. When the second member 3 is an aluminum alloy material, the weight of the adhesively joined structure can be reduced, which is suitable. Examples of the aluminum alloy include aluminum alloys containing one or two or more of Si, Fe, Cu, Mn, Mg, Cr, Zn, Ti, V, Zr, Pb, and Bi, and for example, generally known aluminum alloys such as 1000 series, 2000 series, 3000 series, 4000 series, 5000 series, 6000 series, and 7000 series described in the above JIS H4000: 2006 can be mentioned as the material of the second member 3. The 5000 series and 6000 series, which have strength and formability, are suitable as the second member 3.

Moreover, the second member 3 may be a magnesium alloy material. As the magnesium alloy, magnesium alloys containing one or two or more of Al, Zn, Mn, Fe, Si, Cu, Ni, Ca, Zr, Li, Pb, Ag, Cr, Sn, Y, Sb, and other rare earth elements can be mentioned as the material of the second member 3, and generally known magnesium alloys such as an AM series containing Al, which are described in the ASTM standard, an AZ series containing Al and Zn, and a ZK series containing Zn can be used.

In any of the above cases, the adhesively joined structure 1A has excellent bonding durability.

<Adhesive layer 4>

The adhesive layer 4 is disposed between the first member 2 and the second member 3 in the bonding region 5 and bonds the first member 2 and the second member 3 to each other.

The adhesive layer 4 is mainly constituted of an adhesive. The above-described effect of the film portion 22 is not impaired depending on the type of adhesive constituting the adhesive layer 4. Therefore, the adhesive that can be used for the adhesive layer 4 is not particularly limited. For example, an epoxy resin-based adhesive, a polyester resin-based adhesive, a urethane resin-based adhesive, an adhesive obtained by mixing these adhesives with rubber or elastomer, an adhesive to which conductivity is imparted, or the like can be used. Among the above-described ones, from the viewpoint of initial bonding strength, the adhesive layer 4 preferably contains the epoxy resin-based adhesive or the urethane resin-based adhesive (that is, thermosetting adhesive).

In addition, it is preferable that the resin of the adhesive constituting the adhesive layer 4 have a common chemical structure with that of at least one of the resin in the film portion 22 or the resin in the film portion 32. Accordingly, the initial adhesion between the adhesive layer 4, and the film portion 22 and the film portion 32 can be further improved, and the bonding strength of the adhesively joined structure 1 can be further increased.

For example, the resin of the adhesive constituting the adhesive layer 4 may have a common main chain with that of at least one of the resin in the film portion 22 or the resin in the film portion 32. Alternatively, the resin of the adhesive constituting the adhesive layer 4 may have a common side chain functional group with that of at least one of the resin in the film portion 22 or the resin in the film portion 32.

The adhesively joined structure 1 according to the present embodiment has been described in detail above. According to the present embodiment, at least the first member 2 is formed of the plated steel 21, the surface of the plating layer 12 of the plated steel 21 is an uneven surface, and at least some of the plurality of blocky binary eutectic structures or the plurality of blocky ternary eutectic structures included in the plating layer are continuously present from the surface of the plating layer to a position at 1/2 of the average thickness of the plating layer. Therefore, the adhesion of the adhesive layer 4 to the plating layer 12 is improved, and the bonding durability is improved. In addition, since the plating layer is the Zn-Al-Mg-based hot-dip plating layer, the plating layer has particularly excellent end surface detectability. Therefore, the adhesively joined structure 1 of the present embodiment has excellent bonding durability and corrosion resistance.

In addition, the resin particles 221 and the organic compound phase 223 in the film portion 22 and the film portion 32 suppress water entering into the interface between the first member 2 and the adhesive layer 4 and the interface between the second member 3 and the adhesive layer 4. As a result, the deterioration of the adhesive layer 4 and the corrosion of the first member 2 and the second member 3 is suppressed. Therefore, the adhesively joined structure 1 suppresses a decrease in bonding strength and has excellent bonding durability.

(Modification example)

The embodiment of the present disclosure has been described above. Hereinafter, some modification examples of the above embodiment of the present disclosure will be described. Respective modification examples described below may be applied alone to the above embodiment of the present disclosure or may be applied in combination to the above embodiment of the present disclosure. In addition, the respective modification examples may be applied instead of the configuration described in the above embodiment of the present disclosure or may be additionally applied to the configuration described in the above embodiment of the present disclosure. Hereinafter, the differences between the above-described embodiment and the respective modification examples will be mainly described, and the same matters will be appropriately omitted.

The second member 3A is not limited to the above-described embodiment, and can be constituted of any material.

For example, as a material that can be used for the second member 3A, in addition to the above-described materials, a resin material, a ceramic material, or the like can be used.

In addition, the second member 3 may be another steel material other than the above. The steel material may be subjected to any surface treatment. Here, the surface treatment includes, for example, various kinds of plating treatment such as zinc-based plating, aluminum plating, and tin plating, chemical conversion treatment such as zinc phosphate treatment, chromate treatment, and chromate-free treatment, physical surface roughening treatment such as sandblasting, and chemical surface roughening treatment such as chemical etching but is not limited to these. In addition, a plurality of kinds of surface treatment may be applied. As the surface treatment, it is preferable that at least a treatment for the purpose of imparting antirust properties be performed.

Particularly, plated steels subjected to plating treatment among the steel materials are preferable as the metal portion 21 due to their excellent corrosion resistance. Examples of the plated steels which are particularly preferable as the metal portion 21 include zinc-based plated steels, Ni-plated steels, alloyed Ni-plated steels obtained by alloying the Ni-plated steels through heat treatment to diffuse Fe into Ni plating, Al-plated steels, tin-plated steels, chromium-plated steels, and the like.

Since the zinc-based plated steel sheets among the various plated steels described above have excellent corrosion resistance, the zinc-based plated steel sheets are suitable as the metal portion 21.

In addition, in a case where the second member 3 is electrogalvanized steel, steels plated only with zinc (generally referred to as EG) may be used, or zinc-nickel electroplated steels may be used. In addition, as the hot-dip galvanized steels, those generally referred to as GI containing 0.2% of Al in a galvanized layer may be used, or steels generally referred to as Zn-Al alloy-plated steel sheets containing 1 to 10% of Al in a galvanized layer may be used.

In addition, the shape of the adhesively joined structure according to the present embodiment is not limited to the above-described embodiment. The shapes of the first member and the second member constituting the adhesively joined structure according to the present embodiment can be any one, and any portion can also be selected as the bonding part between the first member and the second member. Moreover, the adhesively joined structure according to the present embodiment may have members other than the first member and the second member. FIGS. 4 and 5 are schematic perspective views of an adhesively joined structure according to another modification example of the present embodiment, and FIG. 6 is a schematic view illustrating a bonded state of the adhesively joined structure according to another modification example of the present embodiment.

An adhesively joined structure 1B shown in FIG. 4 has a hat-type first member 2B and a flat-plate-shaped second member 3B, and the second member 3B is bonded in a bonding region 5B on a flange portion of the first member 2B via the adhesive layer 4. An adhesively joined structure 1C shown in FIG. 5 has a hat-type first member 2C and a hat-type second member 3C, and these members are disposed such that flange portions thereof face each other. The facing flange portions of the first member 2C and the second member 3C are bonded to each other via an adhesive layer 4C to form a bonding region 5C. Moreover, in an adhesively joined structure 1D shown in FIG. 6, the second member 3D covers an end portion of a plate-shaped portion of the first member 2D by hem folding to form a hem portion. Also, in the hem portion, the first member 2D and the second member 3D are bonded to each other via an adhesive layer 4D.

In any of the modification examples shown in FIGS. 4 to 6, at least the first member 2 is made of the plated steel 21, the surface of the plating layer 12 of the plated steel 21 is an uneven surface, and at least some of the plurality of blocky binary eutectic structures or the plurality of blocky ternary eutectic structures in the plating layer are continuously present from the surface of the plating layer to a position at 1/2 of the average thickness of the plating layer. Therefore, the adhesively joined structures 1B to 1D also have excellent bonding durability and corrosion resistance.

Moreover, in the above-described embodiment, a case where the first member 2 and the second member 3 are bonded to each other only by the adhesive layer 4 has been described. However, the present disclosure is not limited to this, and adhesive joining by the adhesive layer can be combined with other joining methods (second joining).

The second joining that can be combined with the adhesive joining is not particularly limited, and any joining methods can be adopted. Specifically, examples of such joining methods include melt joining, non-melt joining, mechanical joining, and the like.

For example, spot welding, arc welding, laser welding, and the like can be used as the melt joining. The melt joining can be applied to a case where the first member and the second member have a metal portion. The melt joining may be performed by removing an adhesive layer. However, in a case where the adhesive layer has conductivity, the melt joining can be performed without removing the adhesive layer.

Examples of the non-melt joining include friction stir joining, diffusion joining, pressure welding, and the like. Examples of the mechanical joining include rivet joining and screw joining.

(Application)

Next, the applications of the adhesively joined structure according to the present disclosure will be described. The applications of the adhesively joined structure according to the present disclosure are not particularly limited, and the adhesively joined structure can be used as a member of any machine, building, structure, or the like. Particularly, the adhesively joined structure according to the present disclosure has excellent water resistance and adhesiveness and is relatively lightweight because the adhesive is used. Therefore, the adhesively joined structure according to the present disclosure is suitable for components for transportation equipment, particularly components for a vehicle, which are easily placed in an environment in contact with water and for which weight reduction is always required. Therefore, the present disclosure also relates to a component for a vehicle including the adhesively joined structure according to the present disclosure in one aspect thereof.

The component for a vehicle to which the adhesively joined structure according to the present disclosure is applied is not particularly limited and includes, for example, a closed cross-sectional member bonded with a flange (for example, an A pillar, a B pillar, a side sill, and the like), members in which materials are partially stacked for the purpose of reinforcement, stiffening, and the like (for example, a B pillar reinforcement, an outer panel), panel members having a hem-processed portion (a door, a hood, and the like), and the like.

(Manufacturing method of adhesively joined structure)

Subsequently, a method of manufacturing the adhesively joined structure 1 according to the present embodiment will be described.

As shown in a flowchart of FIG. 7, the method of manufacturing the adhesively joined structure 1 according to the present embodiment includes a member-forming step of forming each of the first member 2 and the second member 3 constituting the adhesively joined structure 1, and an adhesive joining step of joining the formed first member 2 and second member 3 to each other using a predetermined adhesive.

<Member-forming step>

As shown in the flowchart of FIG. 7, the member-forming step includes a base material-manufacturing step of manufacturing base materials of the first member 2 and the second member using the materials of the first member 2 and the second member 3; a film portion-forming step of forming the film portion 22 by applying a film coating liquid for forming the film portion 22 to at least part of a base material serving as at least the first member 2 and then performing drying or baking; and a step of forming the base material of the first member 2 in which the film portion 22 is formed and a base material of the second member 3 in a desired shape as necessary.

<<Base material-manufacturing step>>

In the base material-manufacturing step, the base materials of the first member 2 and second member 3 are manufactured using the materials of the first member 2 and the second member 3. The method of manufacturing the base materials is not particularly limited, and the base materials may be manufactured in accordance with usual methods by using various known manufacturing methods used to form desired base materials.

For example, in a case where the zinc-based plated steel sheets are used as the first member 2 and the second member 3, hot-rolled steel sheets or cold-rolled steel sheets are manufactured in accordance with the usual methods, and a zinc-based plated layer may be formed on the hot rolled steel sheets or cold-rolled steel sheets in accordance with the usual methods. In addition, even in a case where other metal materials, resin materials, FRP materials, ceramic materials, and the like are used as the base materials, various known manufacturing methods are used, and the other metal materials, resin materials, FRP materials, ceramics, and the like may be manufactured in accordance with the usual methods. Hereinafter, a method of manufacturing a plated steel will be described in a case where the plated steel is adopted as the first member 2.

The method of manufacturing a plated steel according to the present embodiment includes annealing a steel sheet in a reducing atmosphere, immersing the steel sheet immediately after the annealing in a hot-dip plating bath, and then pulling up the steel sheet, thereby forming a plating layer on a surface of the steel sheet. Next, a cooling gas is sprayed the plating layer in a duration until the temperature of the plating layer reaches 260°C from the bath temperature to cool the plating layer. In this case, the oxygen concentration in the atmosphere on the bath surface of the plating bath and the oxygen concentration in the atmosphere from when the steel sheet is pulled up from the plating bath to when the cooling is completed are controlled in a range of 100 to 5,000 ppm. In addition, the average cooling rate in a duration until the temperature of the plating layer reaches 260°C from the bath temperature is set to 15°C/sec or more. Moreover, the cooling is performed by injecting the cooling gas, and a dew point of the cooling gas is set to 0°C or higher.

That is, the method of manufacturing a plated steel according to the present embodiment includes, as shown in the flowchart of FIG. 7,

(S1) a step of annealing a steel sheet in a reducing atmosphere,
(S2) a step of immersing the steel sheet in a hot-dip plating bath,
(S3) a step of pulling up the steel sheet from the hot-dip plating bath, and
(S4) a step of spraying a cooling gas onto the steel sheet to which the hot-dip plating bath is attached.

(A) in the immersing S2 and the pulling-up S3, the oxygen concentration in the atmosphere on the bath surface of the hot-dip plating bath is set to a range of 100 to 5,000 ppm,
(B) in the spraying S4, a dew point of the cooling gas is set to 0°C or higher,
(C) in the spraying S4, an average cooling rate until the temperature of the plating layer reaches 260°C from the temperature of the hot-dip plating bath is set to 15°C/sec or more, and
(D) in the spraying S4, the oxygen concentration in the atmosphere from when the steel sheet is pulled up from the plating bath to when the cooling is completed is set in a range of 100 to 5,000 ppm. The plated steel according to the present embodiment can be obtained by combining all of the conditions A, B, C, and D. Hereinafter, the details of the method of manufacturing a plated steel will be described in order.

(S1 Annealing)

The annealing of the steel sheet to be a plated original sheet is performed in a reducing atmosphere. The reducing atmosphere and annealing conditions are not particularly limited. By this annealing, the oxide present on the surface of the steel sheet is removed as much as possible.

(S2 Immersing)

Next, the steel sheet immediately after the annealing is immersed in the hot-dip plating bath. The chemical composition of the plating bath may be appropriately adjusted such that the above-described chemical composition of the plating layer can be obtained. In addition, the temperature of the plating bath is also not particularly limited, and a temperature at which hot-dip plating can be carried out can be appropriately selected. For example, the plating bath temperature may be set to a value higher than the melting point of the plating bath by about 20°C or more.

(S3 Pulling-up)

Next, the steel sheet is pulled up from the plating bath. The adhesion amount of the plating layer can be controlled by controlling the pulling-up speed of the steel sheet. The adhesion amount of the plating layer may also be controlled by carrying out wiping on the steel sheet to which the plating layer is attached, as necessary. The adhesion amount of the plating layer is not particularly limited and can be set, for example, within the above-described range.

(S4 Spraying)

Next, the plating layer is cooled. The cooling is performed by spraying a cooling gas onto the steel sheet immediately after being pulled up from the hot-dip plating bath. The cooling by spraying the cooling gas is continuously performed until the temperature of the steel sheet reaches 260°C from the bath temperature. The cooling conditions lower than 260°C are not particularly limited, and the cooling by spraying the cooling gas may be performed subsequently, or natural cooling may be performed.

The oxygen concentration in the atmosphere on the bath surface of the plating bath and the oxygen concentration in the atmosphere from when the steel sheet is pulled up from the plating bath to when the cooling is completed are controlled in a range of 100 to 5,000 ppm. The oxygen concentration in these atmospheres is preferably in a range of 100 to 1,000 ppm. When the molten metal of the plating bath adhered to the steel sheet solidifies, an oxide film is formed on the outermost surface of the molten metal in the initial stage of the solidification, and the thickness of the oxide film is affected by the oxygen concentration in the atmosphere. When the oxide film has an appropriate thickness, the oxide film follows the shape change of the surface of the plating layer in the subsequent solidification process, and an uneven surface satisfying the above expression (1) is formed.

When the oxygen concentration in the atmosphere on the bath surface of the plating bath and in the atmosphere from when the steel sheet is pulled up from the plating bath to when the cooling is completed is less than 100 ppm, an oxide film of sufficient thickness is not formed, and it is difficult to form the surface of the plating layer into an uneven surface. In addition, when the oxygen concentration in the atmosphere exceeds 5,000 ppm, an oxide film having a relatively large film thickness and having a flat surface shape is formed in the initial stage of the solidification stage, and the oxide film does not follow the shape change of the surface of the plating layer in the solidification process, the surface of the plating layer after the solidification becomes a flat surface, and the above-described Expression (1) cannot be satisfied. In addition, when the oxygen concentration in the atmosphere exceeds 5,000 ppm, the oxide film is easily cracked, and it may be difficult to maintain the shape of the plating layer during the solidification.

The method for setting the oxygen concentration in the atmosphere on the bath surface of the plating bath to a range of 100 to 5,000 ppm is not particularly limited. For example, a cover that covers the surface of the plating bath may be provided, and a gas having an oxygen concentration of 100 to 5,000 ppm may be supplied into the cover. The type of gas supplied to the surface of the plating bath is not particularly limited as long as the oxygen concentration is in a range of 100 to 5,000 ppm, and may be a non-oxidizing gas such as nitrogen or an inert gas such as argon or a mixed gas thereof.

In order to set the oxygen concentration in the atmosphere from when the steel sheet is pulled up from the plating bath to when the cooling is completed to a range of 100 to 5,000 ppm, for example, the oxygen concentration of the cooling gas sprayed onto the steel sheet may be set to a range of 100 to 5,000 ppm. In a case where the cooling gas is air, the oxygen concentration of the cooling gas becomes excessive, and a suitable plating layer cannot be obtained.

In addition, by setting the dew point of the cooling gas to 0°C or higher, the function of maintaining the shape of the oxide film can be maintained. When the dew point of the cooling gas is lower than 0°C, a plating layer of which the surface shape satisfies the above expression (1) cannot be obtained. The type of cooling gas is not particularly limited as long as the oxygen concentration is in a range of 100 to 5,000 ppm, and may be a non-oxidizing gas such as nitrogen or an inert gas such as argon, or a mixed gas thereof.

In addition, the average cooling rate until the temperature of the plating layer reaches 260°C from the bath temperature is set to 15°C/sec or more. The upper limit of the average cooling rate is not particularly limited, but it may be, for example, 200°C/sec or less. By setting the average cooling rate to 15°C/sec or more, an Al primary phase (Al phase) or the Al-Zn phase is sufficiently crystallized in the initial stage of the solidification process. The average cooling rate until the temperature of the plating layer reaches 260°C from the bath temperature is a value calculated by the following expression. The cooling time is the time from when the steel sheet is pulled up from the plating bath to when the temperature of the plating layer decreases to 260°C.

$$\text{Average cooling rate} = (\text{bath temperature} - 260)/\text{cooling time}$$

As the Al primary phase (Al phase) or the Al-Zn phase is sufficiently crystallized in the initial stage of the solidification process, the amount of molten metal on the surface of the steel sheet decreases. When the binary eutectic structures or the ternary eutectic structures begin to crystallize with a decrease in temperature of the molten metal, these eutectic structures are formed so as to fill the surroundings of the already crystallized Al phase or Al-Zn phase. Since the crystallization of the eutectic structures begins when the remaining amount of molten metal is reduced, the binary eutectic structures or the ternary eutectic structures form recessed parts of the plating layer. In addition, the crystallization of the eutectic structures mainly begins from a region closer to the steel sheet of the plating layer, and more specifically, the crystallization begins from the nucleation on the surface of the Fe-Al-based interface alloy layer as a base point, and proceeds toward the surface of the plating layer. Accordingly, the binary eutectic structures or the ternary eutectic structures are continuously present from the steel sheet side of the plating layer toward the surface side.

In addition, in the present embodiment, a step of causing cracks in the plating layer may be performed after the manufacturing of the plated steel. Specifically, bending back processing using a tension leveler or a skin pass process may be performed. As these conditions, it is desirable to set a condition in which a strain having a total elongation of 0.2% to 2.0% is applied to the steel. Accordingly, cracks are generated in the plating layer, and thus the adhesion to the adhesive layer 4 is further improved.

<<Film portion-forming step>>

In the present embodiment, the film portion-forming step may be performed or may not be performed. In a case where the film portion 22 is formed on the first member 2 or the second member 3, the film portion-forming step is performed. In the film portion-forming step, for example, when the film portion 22 is formed on the plated steel 21 as the first member 2, the film portion 22 is formed by applying a film coating liquid for forming the film portion 22 to at least part of the plating layer 12 and then performing drying or baking.

Here, the method of manufacturing the film coating liquid is not particularly limited. For example, a solvent such as water according to the organic resins to be used may be used, and an organic resin containing one or more of a urethane group, an epoxy group, and an ester group and an organic silicon compound including a Si-C bond and at least one of a Si-O bond or a Si-OH bond may be blended in a desired solid content volume ratio in such a solvent and may be mixed and stirred by known various methods.

The method of applying the film coating liquid for forming the film portion 22 is not particularly limited, and various known methods can be appropriately used. For example, in a case where the film coating liquid is a viscous liquid, the film coating liquid is applied by using known methods such as coating by a discharge method from a slit nozzle or a circular nozzle, brush coating, plate coating, spatula coating, and the like. In addition, in a case where a film coating liquid in which the above are dissolved in a predetermined solvent is used, for example, various known coating methods such as brush coating, spraying, bar coating, discharge coating from nozzles of various shapes, die coater coating, curtain coater coating, roll coater coating, ink jet coating, and the like can be used. In addition to those, various known methods such as bar coating, roll coating, screen printing and powder coating can be adopted.

In a case where the film portion is formed on the plated steel according to the present embodiment, it is preferable to apply the film coating liquid within 60 minutes after the formation of the plating layer. When the time required to apply the film coating liquid is within 60 minutes, a chemical bond is easily formed between the organic silicon compound and the plating layer. Thus, when an analysis is made by TOF-SIMS, the count number of the peaks corresponding to the Si-O-Me bonds (Me: metal element) is 15 or more. In addition, when the time until the film coating liquid is applied is within 60 minutes, the value obtained by dividing the count value of the peaks indicating the Si-O-Me bonds by the total value of all the secondary ion count numbers detected in a mass scan range m/z = 0 to 300 (total ion correction value) is $1.0 \times 10^{-3}$ or more.

In addition, the drying or baking can be performed by, for example, heat treatment or the like. The heating conditions are not particularly limited, and for example, the drying or baking time can be 5 seconds or longer to 30 minutes or shorter under the temperature conditions of 80°C or higher and 250°C or lower.

<<Forming step>>

In the forming step, the first member 2 in which the film portion 22 is formed, and the second member 3 is formed into a desired shape as necessary. Here, the forming method is not particularly limited and a processing method for obtaining the desired shape of a formed article may be selected from known metal processing methods. In addition, as necessary, part of the forming step and an adhesive joining step to be described below may be simultaneously performed.

<Adhesive joining step>

The adhesive joining step is a step of joining the formed first member 2 and the second member 3 with a predetermined adhesive. In the present step, first, a desired adhesive is disposed on the portions to be bonded (for example, the flange portions) in the obtained first member 2 and the second member 3 to form the bonding region 5. After that, the first member 2 and the second member 3 are stacked via the bonding region 5, and then the adhesive is hardened by heat treatment. Here, the method of disposing the desired adhesive is not particularly limited, and a desired adhesive may be applied or a desired adhesive resin sheet may be disposed. Accordingly, it is possible to obtain the adhesively joined structure 1 according to the present embodiment, in which the first member 2 and the second member 3 are adhesively joined to each other via the adhesive layer 4.

In the above adhesive joining step, various coating treatments and other joining treatments may be performed, as necessary. For example, as the joining treatment, mechanical joining using bolting or riveting, welding processing such as spot welding, or the like may be performed.

More specifically, for example, in a case where the adhesively joined structure 1D shown in FIG. 6 is manufactured, the adhesively joined structure 1D can be obtained by applying an adhesive to one side or both sides of a flange portion that joins the formed first member 2 and the second member 3, stacking the joined portions of the first member 2 and the second member 3 via the adhesive, and hardening the adhesive by holding at room temperature or performing heat treatment of the adhesive.

In addition, for example, in a case where the first member 2 serving as the metal member is reinforced by the second member 3 serving as a fiber-reinforced plastic as in the adhesively joined structure 1 shown in FIG. 1, the adhesively joined structure 1 can be obtained by performing warm-forming in a state in which the first member 2 and the second member 3 are stacked via the adhesive.

The method of manufacturing the adhesively joined structure 1 according to the present embodiment has been briefly described above. The adhesively joined structure according to the present disclosure is not limited to one manufactured by the above-described manufacturing method and can be manufactured by any manufacturing method.

## Examples

Hereinafter, the present disclosure will be described in more detail with reference to examples. The examples to be described below are merely examples of the present disclosure, and the present disclosure is not limited thereto.

<Manufacture of plated steel>

First, a plated steel was manufactured by the following procedure.

As a plated original sheet, a cold-rolled steel sheet (0.05C-0.1Si-0.2Mn) having a sheet thickness of 1.6 mm was used. First, the steel sheet was annealed. The steel sheet after the annealing was immersed in various hot-dip plating baths and then pulled up to attach a plating layer to the surface of the steel sheet. Next, various plated steel sheets were manufactured by cooling the plating layer using a cooling gas until the plating layer reached 260°C from immediately after the plating bath was pulled up. The cooling gas was mainly composed of nitrogen gas. The oxygen concentration and the dew point of the cooling gas were as shown in Tables 2A and 2B.

During the steel sheet was annealed in a reducing atmosphere, the annealing conditions were set to a soaking temperature of 800°C and a soaking time of 10 seconds. The annealing atmosphere was a reducing atmosphere including a mixed gas of 5% of hydrogen and a remainder of nitrogen. The oxygen concentration in the annealing atmosphere was set to 20 ppm or less. Then, the steel sheet after the annealing was air-cooled with nitrogen gas until the immersed sheet temperature reached the bath temperature + 20°C, and then were immersed in a hot-dip plating bath for about 3 seconds and pulled up. The pulling-up speed was set to 20 to 200 mm/sec. During the pulling-up, the plating adhesion amount was controlled by $N_2$ wiping gas.

The chemical compositions of the plating layers were as shown in Tables 1A and 1B. Manufacturing conditions were set as shown in Tables 2A and 2B. In addition, the forms of the binary eutectic structures or the ternary eutectic structures in the plating layer were evaluated, and the results are shown in Tables 3A and 3B. Moreover, the coating adhesion and the end surface corrosion resistance of the plated steel sheets were evaluated, and the results thereof are shown in Tables 4A and 4B.

The chemical composition of the plating layer, the microstructure of the plating layer, and the evaluation of the uneven shape of the surface of the plating layer were evaluated by the above-described methods. The evaluation of the uneven shape of the surface of the plating layer was performed by setting an observed visual field in which the length Lo of the plating layer in the longitudinal direction was in a range of 500 μm. In addition, the presence or absence of the $Mg_2Sn$ phase was determined by performing X-ray diffraction measurement on the surface of the plating layer and determining whether or not the diffraction peak of $Mg_2Sn$ was checked.

<Formation of film portion>

Next, a film portion was formed on part of the plated steel by the following procedure.

First, the following five types of chemical conversion treatment agents for forming the film portion were prepared.

(A1) Water-dispersed emulsion type polyurethane resin SF-150 made by DAIICHI KOGYO CO., LTD. and 3-glycidoxypropyltriethoxysilane were blended in a solid content volume ratio of 3:2 to form a chemical conversion treatment agent A1.

(A2) Water-dispersed emulsion type polyurethane resin SF-150 made by DAIICHI KOGYO CO., LTD. and 3-glycidoxypropyltriethoxysilane were blended in a solid content volume ratio of 5:1 to form a chemical conversion treatment agent A2.

(A3) Water-dispersed emulsion type polyurethane resin SF-150 made by DAIICHI KOGYO CO., LTD. and 3-glycidoxypropyltriethoxysilane were blended in a solid content volume ratio of 1:5 to form a chemical conversion treatment agent A3.

(B) A chemical conversion treatment agent B was prepared by adjusting a resin solution in which Polyester resin Byron GK140 made by TOYOBO CO., LTD. was dissolved in cyclohexanone as a solvent, imino-based melamine cymel 325 made by NIPPON CYTEC INDUSTRIES CO., LTD. was mixed with the resin such that the solid content volume ratio was 5: 1, and a hardening catalyst (Catalyst 296-9: NIPPON CYTEC INDUSTRIES CO., LTD.) was added in an amount of 0.1% by volume based on the resin solid content.

(C) A chemical conversion treatment agent C was prepared as an aqueous solution containing only 3-glycidoxypropyltriethoxysilane.

The chemical conversion treatment agent was applied onto the plating layer of the plated steel so as to obtain a film thickness after drying shown in the following Tables 3A and 3B, and was dried and baked at a highest reached sheet temperature (PMT) of 150°C in an induction heating furnace to form the film portion.

<Preparation of first member and second member>

As shown in Tables 1A to 3B, Examples 1 to 29 and Comparative Examples 30 to 35 used the plated steel manufactured by the above procedure as the first member.

In addition, for the second member, the same material as the first member was used as the second member in Examples 1 to 10, 12 to 15, and 18 to 29 and Comparative Examples 30 to 35. In Tables 4A and 4B, regarding the level where the same material as that of the first member was used as the material of the second member, the column of "Second member" was marked "Same as left".

Moreover, for the second member, in Example 11, a hot-dip galvannealed steel sheet (GA) having a tensile strength of 980 MPa and a sheet thickness of 1.0 mm was used as the second member.

In addition, in Example 16, a standard A5000 series aluminum sheet having a sheet thickness of 1.0 mm and a tensile strength of 290 MPa was used as the second member.

Moreover, in Example 17, a commercially available CFRP sheet material having a sheet thickness of 1.0 mm was used as the second member.

<Adhesive joining treatment>

By forming the prepared first member and second member, a metallic hat-type member having a flange was produced. As an adhesive for adhesively joining between the first member and the second member, an adhesive prepared by adding 5% by mass of 200 μm glass beads to an epoxy resin-based adhesive Penguin Cement #1066 manufactured by Sunstar Inc. was prepared.

For each combination of the first member and the second member shown in the following Tables 1A to 3B, the above-described adhesive was applied to the surface of the first member, and the second member was further attached to the adhesive. Thereafter, the adhesive was hardened by leaving the adhesive in an atmosphere of 170°C for 30 minutes, and a closed cross-sectional structure was manufactured.

In Examples 10, 13, 16, and 20, structures of joining members were produced by also using spot welding on the parts to which the adhesive was applied. Specifically, spot welding was performed using a CF type Cr-Cu electrode of R40 having a tip diameter of 5 mm and at dotting intervals of 30 mm pitch under welding conditions where the nugget diameter was 3 x t0.5 (t is sheet thickness [mm]). No adhesive was applied to a predetermined spot-welded portion to be spot-welded.

<Electrodeposition coating of hat member>

In order to observe the bonded state in a corrosive environment, hat-shaped members subjected to the adhesive joining treatment described above were subjected to a zinc phosphate treatment (SD5350 system: compliant with the standards made by Nippon Paint Industrial Coatings Co., Ltd.), and then subjected to electrodeposition coating (PN110 Powernics Gray: the standards made by Nippon Paint Industrial Coatings Co.) at 20 μm and baked at a baking temperature of 150°C for 20 minutes.

<Evaluation of adhesively joined structure>

A plurality of samples in which part of the obtained adhesively joined structure was cut out were prepared, and micro-infrared spectroscopy and TOF-SIMS analysis were performed on a vertical cross section in the vicinity of the interface between the first member and the adhesive layer according to the method described earlier.

In the micro-infrared spectroscopy and the TOF-SIMS analysis, a film portion of the vertical cross section in the vicinity of the interface between the first member and the adhesive layer in the obtained adhesively joined structure was cut at an inclination of 5 degrees with an oblique cutting device (SAICAS, DN-20S type made by Daipla Wintes Co., Ltd.) to enlarge the film portion. The micro-infrared spectrophotometer used was IRT-5200 manufactured by JASCO Corporation, and the TOF-SIMS used was TOF-SIMS TRIFT-V manufactured by ULVAC-PHI, Inc.

Here, in the micro-infrared spectroscopy, mapping measurement was performed using the above-described micro-infrared spectrophotometer. It was determined whether or not the obtained film portion contained one or more of a water-based polyurethane resin, an epoxy resin, and a polyester resin from the attribution of an observed peak derived from a resin component in the infrared absorption spectrum of the obtained film portion. Specifically, in the obtained infrared absorption spectrum, the epoxy group was determined to be contained in a case where a peak was observed in the vicinity of 910 $cm^{-1}$, the urethane group was determined to be contained in a case where a peak was observed in the vicinity of 1550 $cm^{-1}$ and in the vicinity of 1740 $cm^{-1}$, and the ester group was determined to be contained in a case where a peak was observed in the vicinity of 1720 to 1740 $cm^{-1}$. In the following description, a case where at least one of the epoxy group, the urethane group, or the ester group was determined to be contained was denoted as "Yes", and a case where these functional groups were determined to be not contained was denoted as "No".

In addition, in the TOF-SIMS analysis, the above-described device was used, and a certain point of a portion where the thickness of the adhesive layer was reduced to about 1 μm was analyzed while performing argon sputtering from the adhesive layer side toward the metal member side. TOF-SIMS measurement was repeated after the sputtering from the surface to a certain depth with an Ar beam, and then similarly, TOF-SIMS measurement was repeated after the sputtering, and the distribution in the depth direction was acquired for various elements and bonds. The primary ion species was $Au^{3+}$, the acceleration voltage was 30 kV, the sputtering rate was about 80 nm/min ($SiO_2$ conversion), and the measurement region was 50 μm × 50 μm. An interface portion between a chemical conversion film layer (adhesive layer in a case where the chemical conversion film layer was not provided) and the metal member was evaluated for the presence or absence of a peak indicating a Si-O-Me bond and for whether or not the total ion correction value exceeded $1.0 \times 10^{-3}$. Hereinafter, a case where the Si-O-Me bond was present and the total ion correction value was $1.0 \times 10^{-3}$ or more is denoted as A, and a case where the Si-O-Me bond was not present or the total ion correction value was less than $1.0 \times 10^{-3}$ is denoted as B.

In addition, a sample in which part of the obtained adhesively joined structure was cut out was prepared, and a vertical cross section in the vicinity of the interface between the first member and the adhesive layer was observed by SEM (SU3800 manufactured by Hitachi, Ltd.) according to the method described earlier, and (Lr - Lo)/Lo (%) was calculated.

<Evaluation of bonding durability>

The joining durability of each of the obtained adhesively joined structures according to the respective examples was evaluated.

First, the torsional rigidity of the adhesively joined structure according to each example was measured and calculated by a torsion tester. Specifically, both end portions of the adhesively joined structure according to each example were fixed with a jig, and only one end portion was rotated with a central axis of the adhesively joined structure as a rotational axis to add torsional distortion to the adhesively joined structure. In this case, the torsional angle and the torsional moment were measured, and the torsional rigidity of each adhesively joined structure was calculated from a relationship between the torsional angle and the torsional moment in an elastic distortion range. As the relationship between the torsional angle and the torsional moment in the elastic distortion range, specifically, the initial inclination of a torsional angle-torsional moment diagram was used.

Next, a composite cycle corrosion test according to JASO (M609-91) was performed, the adhesively joined structure according to each example was left to stand for 4,800 hours, and the deterioration of the adhesive layer and the interface between the adhesive layer and the chemical conversion film layer was promoted. The torsional rigidity of the adhesively joined structure according to each example after standing in a composite cycle corrosion tester was measured and calculated by the torsion tester. Then, the decrease rate in the torsional rigidity due to the deterioration was calculated in comparison with the torsional rigidity of the adhesively joined structure according to each example for which no deterioration test was performed, and the obtained decrease rate was used as an evaluation index of the joining durability.

The decrease rate in bending strength after the composite cycle corrosion test to the bending strength before the composite cycle corrosion test was performed was calculated, and evaluation was performed according to the following evaluation criteria. Grade C or higher was regarded as a pass.

(Evaluation)

AAA: decrease rate of less than 10%
AA: decrease rate of 10% or more and less than 20%
A: decrease rate of 20% or more and less than 30%
B: decrease rate of 30% or more and less than 40%
C: decrease rate of 40% or more and less than 50%
D: decrease rate of 50% or more

<Simulated end surface corrosion resistance>

For the end surface corrosion resistance, a plurality of samples obtained by cutting out part of the adhesively joined structure were prepared, a vertical cross section in the vicinity of the interface between the first member and the adhesive layer was exposed, each sample was subjected to a neutral salt spray test as specified in JIS Z 2371 with respect to the vertical cross section, and an evaluation was made based on the occurrence situation of red rust on a cut end surface. Hereinafter, evaluation criteria for the red rust area ratio will be shown. "AAA", "AA", and "A" were regarded as passes.

(Evaluation)

AAA: red rust area ratio of 10% or less at 2500 h
AA: red rust area ratio of 10% or less at 2,000 h
A: red rust area ratio of 20% or less at 1,500 h
B: more than 20% of red rust area ratio at 1,500 h

The results are shown in Tables 1A to 4B.

In the adhesively joined structures of Nos. 1 to 29, the surface of the plating layer was an uneven surface, one or both of a plurality of the blocky binary eutectic structures and a plurality of the blocky ternary eutectic structures were present in the plating layer, some of the eutectic structures continuously present from the surface of the plating layer to the depth of 1/2 of the thickness of the plating layer or the Fe-Al-based interface alloy layer were located in the recessed parts of the uneven surface, the chemical composition of the plating layer and the form of the eutectic structures were within the ranges of the present disclosure, and both the bonding durability and the end surface corrosion resistance were excellent.

In No. 30, the amount of Al in the plating layer was insufficient. Therefore, in No. 30, (Lr - Lo)/Lo × 100 was small and the bonding durability was insufficient.

In No. 31, the amount of Al in the plating layer was excessive. Therefore, in No. 31, (Lr - Lo)/Lo × 100 was small and the bonding durability was insufficient.

In No. 32, the amount of Mg in the plating layer was insufficient. Therefore, in No. 32, (Lr - Lo)/Lo × 100 was small and the bonding durability was insufficient.

In No. 33, the amount of Mg in the plating layer was excessive. Therefore, in No. 33, (Lr - Lo)/Lo × 100 was small and the bonding durability was insufficient.

In No. 34, the oxygen concentration in the atmosphere from the plating bath to the end of the cooling step exceeded 5,000 ppm. Therefore, in No. 34, (Lr - Lo)/Lo × 100 was small and the bonding durability was insufficient.

In No. 35, the average cooling rate from the bath temperature of the plating bath to 260°C was low. Therefore, in No. 35, the Al primary phase (Al phase or Al-Zn phase) was not sufficiently crystallized, (Lr - Lo)/Lo × 100 was small, and the bonding durability was insufficient.

[Table 1A]

| Category | No. | First member | | | | | | | | | | |
|---|---|---|---|---|---|---|---|---|---|---|---|---|
| | | Chemical composition of plating layer (mass %) Remainder: impurities | | | | | | | | | | Adhesion amount of plating layer (g/m$^2$) |
| | | Zn | Al | Mg | Sn | Si | Ca | Ni | Fe | Other elements | | |
| | | | | | | | | | | Type | Total (%) | |
| Example | 1 | 86.95 | 10.00 | 3.00 | 0.00 | 0.00 | 0.00 | 0.00 | 0.05 | - | 0.00 | 45 |
| Example | 2 | 85.70 | 11.00 | 3.00 | 0.06 | 0.10 | 0.00 | 0.00 | 0.05 | Bi | 0.005 | 50 |
| Example | 3 | 85.70 | 11.00 | 3.00 | 0.00 | 0.10 | 0.04 | 0.00 | 0.05 | V | 0.009 | 50 |
| Example | 4 | 85.10 | 10.00 | 4.50 | 0.06 | 0.20 | 0.00 | 0.00 | 0.08 | - | 0.00 | 50 |
| Example | 5 | 82.70 | 12.00 | 5.00 | 0.06 | 0.10 | 0.00 | 0.00 | 0.08 | Pb | 0.03 | 50 |
| Example | 6 | 81.00 | 12.00 | 6.00 | 0.00 | 0.20 | 0.00 | 0.00 | 0.10 | Zr | 0.01 | 50 |
| Example | 7 | 81.60 | 12.00 | 6.00 | 0.06 | 0.20 | 0.00 | 0.00 | 0.08 | Co | 0.008 | 45 |
| Example | 8 | 81.60 | 13.00 | 5.00 | 0.06 | 0.20 | 0.00 | 0.00 | 0.10 | - | 0.00 | 45 |
| Example | 9 | 79.50 | 15.00 | 5.00 | 0.06 | 0.20 | 0.00 | 0.00 | 0.20 | Ag | 0.01 | 54 |
| Example | 10 | 77.50 | 17.00 | 5.00 | 0.01 | 0.20 | 0.04 | 0.001 | 0.20 | Li | 0.01 | 44 |
| Example | 11 | 75.00 | 18.00 | 6.00 | 0.10 | 0.40 | 0.04 | 0.00 | 0.20 | Sb | 0.08 | 80 |
| Example | 12 | 74.30 | 19.00 | 6.00 | 0.20 | 0.30 | 0.04 | 0.00 | 0.10 | P | 0.01 | 35 |

(continued)

| Category | No. | First member | | | | | | | | | | |
|---|---|---|---|---|---|---|---|---|---|---|---|---|
| | | Chemical composition of plating layer (mass %) Remainder: impurities | | | | | | | | | | Adhesion amount of plating layer (g/m$^2$) |
| | | Zn | Al | Mg | Sn | Si | Ca | Ni | Fe | Other elements | | |
| | | | | | | | | | | Type | Total (%) | |
| Example | 13 | 74.60 | 19.00 | 6.00 | 0.01 | 0.20 | 0.04 | 0.00 | 0.10 | In | 0.02 | 35 |
| Example | 14 | 73.40 | 19.00 | 7.00 | 0.01 | 0.20 | 0.04 | 0.00 | 0.30 | Mn | 0.01 | 55 |
| Example | 15 | 69.50 | 20.00 | 10.00 | 0.01 | 0.30 | 0.05 | 0.00 | 0.10 | B | 0.005 | 50 |
| Example | 16 | 73.70 | 20.00 | 6.00 | 0.01 | 0.10 | 0.04 | 0.00 | 0.10 | Mo | 0.03 | 35 |
| Example | 17 | 73.60 | 20.00 | 6.00 | 0.01 | 0.20 | 0.04 | 0.00 | 0.10 | - | 0.00 | 50 |
| Example | 18 | 62.40 | 22.00 | 15.00 | 0.01 | 0.40 | 0.04 | 0.00 | 0.10 | La | 0.01 | 50 |

The underlined portions indicate that they are outside the scope of present disclosure.

[Table 1B]

| Category | No. | First member | | | | | | | | | | |
|---|---|---|---|---|---|---|---|---|---|---|---|---|
| | | Chemical composition of plating layer (mass %) Remainder: impurities | | | | | | | | | | Adhesion amount of plating layer (g/m$^2$) |
| | | Zn | Al | Mg | Sn | Si | Ca | Ni | Fe | Other elements | | |
| | | | | | | | | | | Type | Total (%) | |
| Example | 19 | 69.00 | 22.00 | 8.00 | 0.01 | 0.70 | 0.04 | 0.00 | 0.20 | Ce | 0.01 | 55 |
| Example | 20 | 72.60 | 22.00 | 5.00 | 0.00 | 0.10 | 0.01 | 0.00 | 0.20 | Nb | 0.02 | 50 |
| Example | 21 | 70.60 | 24.00 | 5.00 | 0.00 | 0.10 | 0.00 | 0.00 | 0.30 | - | 0.00 | 55 |
| Example | 22 | 71.40 | 22.00 | 6.00 | 0.00 | 0.10 | 0.01 | 0.01 | 0.40 | Ti | 0.01 | 55 |
| Example | 23 | 67.60 | 23.00 | 8.00 | 0.01 | 0.70 | 0.04 | 0.00 | 0.60 | - | 0.00 | 55 |
| Example | 24 | 67.80 | 23.00 | 8.00 | 0.01 | 0.50 | 0.04 | 0.00 | 0.60 | Y | 0.01 | 35 |
| Example | 25 | 64.70 | 25.00 | 8.00 | 0.01 | 1.10 | 0.04 | 0.00 | 1.00 | Cu | 0.10 | 55 |
| Example | 26 | 66.00 | 24.00 | 7.00 | 0.01 | 1.50 | 0.04 | 0.00 | 1.40 | W | 0.01 | 35 |
| Example | 27 | 63.60 | 25.00 | 8.00 | 0.02 | 2.00 | 0.04 | 0.00 | 1.30 | Sr | 0.02 | 55 |
| Example | 28 | 48.90 | 28.00 | 8.00 | 0.02 | 0.00 | 0.04 | 0.00 | 15.00 | Cr | 0.03 | 35 |
| Example | 29 | 58.80 | 30.00 | 9.00 | 0.01 | 0.80 | 0.04 | 0.00 | 1.30 | - | 0.00 | 35 |
| Comparative Example | 30 | 86.80 | <u>9.00</u> | 4.00 | 0.00 | 0.00 | 0.00 | 0.00 | 0.10 | - | 0.00 | 46 |
| Comparative Example | 31 | 64.80 | <u>31.00</u> | 4.00 | 0.00 | 0.10 | 0.00 | 0.00 | 0.10 | - | 0.00 | 50 |
| Comparative Example | 32 | 79.80 | 19.00 | <u>0.80</u> | 0.00 | 0.20 | 0.01 | 0.00 | 0.10 | - | 0.00 | 50 |
| Comparative Example | 33 | 65.30 | 19.00 | <u>15.50</u> | 0.00 | 0.00 | 0.05 | 0.00 | 0.10 | - | 0.00 | 50 |
| Comparative Example | 34 | 81.10 | 15.00 | 3.00 | 0.00 | 0.00 | 0.01 | 0.00 | 0.80 | - | 0.00 | 50 |

(continued)

| Category | No. | First member | | | | | | | | | | |
|---|---|---|---|---|---|---|---|---|---|---|---|---|
| | | Chemical composition of plating layer (mass %) Remainder: impurities | | | | | | | | | | Adhesion amount of plating layer (g/m$^2$) |
| | | Zn | Al | Mg | Sn | Si | Ca | Ni | Fe | Other elements | | |
| | | | | | | | | | | Type | Total (%) | |
| Comparative Example | 35 | 81.10 | 15.00 | 3.00 | 0.00 | 0.00 | 0.01 | 0.00 | 0.80 | - | 0.00 | 50 |
| Comparative Example | 36 | 81.10 | 15.00 | 3.00 | 0.00 | 0.00 | 0.01 | 0.00 | 0.80 | - | 0.00 | 50 |

The underlined portions indicate that they are outside the scope of present disclosure.

[Table 2A]

| Category | No. | First member | | | | |
|---|---|---|---|---|---|---|
| | | Manufacturing conditions | | | | |
| | | Bath temperature (°C) | Bath surface oxygen concentration (ppm) | Cooling rate of bath temperature to 260°C (°C/s) | Cooling gas dew point of bath temperature to 260°C (°C) | Cooling gas oxygen concentration of bath temperature to 260°C (ppm) |
| Example | 1 | 460 | 5000 | 15 | 0 | 5000 |
| Example | 2 | 480 | 2000 | 15 | 0 | 100 |
| Example | 3 | 500 | 1000 | 15 | 0 | 100 |
| Example | 4 | 500 | 2000 | 15 | 0 | 100 |
| Example | 5 | 530 | 100 | 15 | 0 | 100 |
| Example | 6 | 530 | 100 | 15 | 0 | 100 |
| Example | 7 | 530 | 100 | 15 | 0 | 100 |
| Example | 8 | 530 | 100 | 15 | 0 | 100 |
| Example | 9 | 530 | 100 | 15 | 0 | 100 |
| Example | 10 | 530 | 100 | 15 | 0 | 100 |
| Example | 11 | 530 | 100 | 15 | 0 | 100 |
| Example | 12 | 530 | 100 | 15 | 0 | 100 |
| Example | 13 | 530 | 100 | 15 | 0 | 100 |
| Example | 14 | 530 | 100 | 15 | 0 | 100 |
| Example | 15 | 590 | 100 | 15 | 0 | 100 |
| Example | 16 | 540 | 100 | 15 | 0 | 100 |
| Example | 17 | 540 | 100 | 15 | 0 | 100 |
| Example | 18 | 540 | 100 | 15 | 0 | 100 |

The underlined portions indicate that they are outside the scope of preferable manufacturing conditions.

[Table 2B]

| Category | No. | First member | | | | |
|---|---|---|---|---|---|---|
| | | Manufacturing conditions | | | | |
| | | Bath temperature (°C) | Bath surface oxygen concentration (ppm) | Cooling rate of bath temperature to 260°C (°C/s) | Cooling gas dew point of bath temperature to 260°C (°C) | Cooling gas oxygen concentration of bath temperature to 260°C (ppm) |
| Example | 19 | 540 | 100 | 15 | 0 | 100 |
| Example | 20 | 540 | 100 | 15 | 0 | 100 |
| Example | 21 | 560 | 100 | 15 | 0 | 100 |
| Example | 22 | 540 | 100 | 15 | 0 | 100 |
| Example | 23 | 550 | 2000 | 15 | 0 | 100 |
| Example | 24 | 550 | 100 | 15 | 0 | 100 |
| Example | 25 | 550 | 2000 | 15 | 0 | 100 |
| Example | 26 | 550 | 2000 | 15 | 0 | 100 |
| Example | 27 | 550 | 2000 | 15 | 0 | 100 |
| Example | 28 | 550 | 2000 | 15 | 0 | 100 |
| Example | 29 | 550 | 2000 | 15 | 0 | 100 |
| Comparative Example | 30 | 450 | 2000 | 15 | 0 | 100 |
| Comparative Example | 31 | 600 | 2000 | 15 | 0 | 100 |
| Comparative Example | 32 | 540 | 2000 | 15 | 0 | 100 |
| Comparative Example | 33 | 540 | 2000 | 15 | 0 | 100 |
| Comparative Example | 34 | 520 | <u>6000</u> | 15 | 0 | 100 |
| Comparative Example | 35 | 520 | 2000 | <u>13</u> | 0 | 100 |
| Comparative Example | 36 | 520 | 2000 | 15 | 0 | <u>6000</u> |

The underlined portions indicate that they are outside the scope of preferable manufacturing conditions.

[Table 3A]

| Category | No. | First member | | | | | | |
|---|---|---|---|---|---|---|---|---|
| | | Eutectic structure distribution | | | Plating layer | | Chemically treated film layer | |
| | | Presence or absence of eutectic structure continuous from surface to position at 1/2 of plating layer thickness | Number of points continuous from surface to position at 1/2 of plating layer thickness | Number of points continuous from surface to Fe-Al-based interface alloy layer | Uneven shape | $Mg_2Sn$ phase | Chemical conversion treatment agent | Thickness (μm) |
| | | | | | (Lr - Lo)/Lo × 100 (%) | Presence or absence | | |
| Example | 1 | Yes | 1 | 0 | 2.0 | No | - | - |
| Example | 2 | Yes | 2 | 0 | 4.7 | Yes | B | 0.4 |
| Example | 3 | Yes | 3 | 2 | 6.0 | Yes | A1 | 0.3 |
| Example | 4 | Yes | 3 | 2 | 5.5 | Yes | A1 | 0.5 |
| Example | 5 | Yes | 4 | 3 | 6.7 | Yes | A1 | 0.7 |
| Example | 6 | Yes | 4 | 2 | 6.8 | No | A1 | 0.1 |
| Example | 7 | Yes | 5 | 3 | 7.1 | Yes | A1 | 4.0 |
| Example | 8 | Yes | 4 | 4 | 7.8 | Yes | A1 | 0.7 |
| Example | 9 | Yes | 6 | 5 | 8.0 | Yes | A1 | 0.9 |
| Example | 10 | Yes | 8 | 4 | 8.6 | Yes | A2 | 0.6 |
| Example | 11 | Yes | 10 | 5 | 8.2 | Yes | A1 | 0.6 |
| Example | 12 | Yes | 12 | 8 | 8.9 | Yes | A1 | 0.8 |
| Example | 13 | Yes | 14 | 9 | 8.3 | Yes | A3 | 0.9 |
| Example | 14 | Yes | 15 | 9 | 8.9 | Yes | A3 | 5.0 |
| Example | 15 | Yes | 13 | 20 | 9.4 | Yes | B | 0.9 |
| Example | 16 | Yes | 11 | 10 | 10.4 | Yes | A3 | 0.6 |
| Example | 17 | Yes | 11 | 11 | 9.6 | Yes | A3 | 0.6 |
| Example | 18 | Yes | 10 | 8 | 9.7 | Yes | C | 0.2 |

The underlined portions indicate that they are outside the scope of present disclosure.

[Table 3B]

| Category | No. | First member | | | | | | |
|---|---|---|---|---|---|---|---|---|
| | | Eutectic structure distribution | | | Plating layer | | Chemically treated film layer | |
| | | Presence or absence of eutectic structure continuous from surface to position at 1/2 of plating layer thickness | Number of points continuous from surface to position at 1/2 of plating layer thickness | Number of points continuous from surface to Fe-Al-based interface alloy layer | Uneven shape | $Mg_2Sn$ phase | Chemical conversion treatment agent | Thickness (μm) |
| | | | | | (Lr - Lo)/Lo × 100 (%) | Presence or absence | | |
| Example | 19 | Yes | 8 | 6 | 9.5 | Yes | A3 | 0.6 |
| Example | 20 | Yes | 8 | 6 | 8.9 | No | A3 | 0.8 |
| Example | 21 | Yes | 7 | 5 | 9.9 | No | A3 | 0.3 |
| Example | 22 | Yes | 6 | 6 | 9.1 | No | - | - |
| Example | 23 | Yes | 5 | 3 | 6.0 | Yes | A2 | 0.6 |
| Example | 24 | Yes | 5 | 2 | 8.0 | Yes | A3 | 0.6 |
| Example | 25 | Yes | 4 | 3 | 5.5 | Yes | A1 | 0.6 |
| Example | 26 | Yes | 4 | 2 | 4.5 | Yes | A1 | 0.6 |
| Example | 27 | Yes | 3 | 2 | 4.3 | Yes | A2 | 0.6 |
| Example | 28 | Yes | 2 | 1 | 4.5 | Yes | A1 | 0.6 |
| Example | 29 | Yes | 2 | 0 | 2.5 | Yes | A1 | 0.6 |
| Comparative Example | 30 | No | 0 | 0 | 0.3 | No | A1 | 0.6 |
| Comparative Example | 31 | No | 0 | 0 | 0.8 | No | - | - |
| Comparative Example | 32 | No | 0 | 0 | 1.5 | No | - | - |
| Comparative Example | 33 | No | 0 | 0 | 1.1 | No | - | - |
| Comparative Example | 34 | No | 0 | 0 | 0.5 | No | - | - |
| Comparative Example | 35 | No | 0 | 0 | 0.3 - | No | - | - |
| Comparative Example | 36 | No | 0 | 0 | 0.7 | No | - | - |

The underlined portions indicate that they are outside the scope of present disclosure.

[Table 4A]

| Category | No. | Second member | Si-O-Me bond | | Presence or absence of urethane, ester or epoxy group | Presence or absence of spot welding | Performance | |
|---|---|---|---|---|---|---|---|---|
| | | | Presence or absence of detection | Count number of peaks | | | Bonding durability | Simulated end surface corrosion resistance |
| Example | 1 | Same as left | No | B | No | | C | A |
| Example | 2 | Same as left | No | B | Yes | - | B | AA |
| Example | 3 | Same as left | Yes | A | Yes | - | A | AA |
| Example | 4 | Same as left | Yes | A | Yes | - | A | AAA |
| Example | 5 | Same as left | Yes | A | Yes | - | A | AAA |
| Example | 6 | Same as left | Yes | A | Yes | - | AA | AA |
| Example | 7 | Same as left | Yes | A | Yes | - | AA | AAA |
| Example | 8 | Same as left | Yes | A | Yes | - | AA | AAA |
| Example | 9 | Same as left | Yes | A | Yes | - | AA | AAA |
| Example | 10 | Same as left | Yes | A | Yes | Yes | AAA | AAA |
| Example | 11 | GA | Yes | A | Yes | - | A | AA |
| Example | 12 | Same as left | Yes | A | Yes | - | A | AAA |
| Example | 13 | Same as left | Yes | A | Yes | Yes | AAA | AAA |
| Example | 14 | Same as left | Yes | A | Yes | - | AAA | AAA |
| Example | 15 | Same as left | Yes | B | Yes | - | A | AA |
| Example | 16 | Aluminum sheet | Yes | A | Yes | Yes | AAA | AAA |
| Example | 17 | CFRP | Yes | A | Yes | - | AAA | AA |
| Example | 18 | Same as left | Yes | A | No | - | A | AA |

The underlined portions indicate that they are outside the scope of present disclosure.

[Table 4B]

| Category | No. | Second member | Si-O-Me bond | | Presence or absence of urethane, ester or epoxy group | Presence or absence of spot welding | Performance | |
|---|---|---|---|---|---|---|---|---|
| | | | Presence or absence of detection | Count number of peaks | | | Bonding durability | Simulated end surface corrosion resistance |
| Example | 19 | Same as left | Yes | A | Yes | - | AAA | AAA |
| Example | 20 | Same as left | Yes | A | Yes | Yes | AAA | AA |
| Example | 21 | Same as left | Yes | A | Yes | - | AAA | AA |
| Example | 22 | Same as left | No | B | No | - | B | A |
| Example | 23 | Same as left | Yes | A | Yes | - | AA | AAA |
| Example | 24 | Same as left | Yes | A | Yes | - | AAA | AAA |
| Example | 25 | Same as left | Yes | A | Yes | - | AA | AAA |
| Example | 26 | Same as left | Yes | A | Yes | - | AA | AAA |
| Example | 27 | Same as left | Yes | A | Yes | - | AA | AAA |
| "Example | 28 | Same as left | Yes | A | Yes | - | AA | AAA |
| Example | 29 | Same as left | Yes | A | Yes | - | A | AAA |
| Comparative Example | 30 | Same as left | No | A | Yes | - | D | A |
| Comparative Example | 31 | Same as left | No | B | No | - | D | A |
| Comparative Example | 32 | Same as left | No | B | No | - | D | B |
| Comparative Example | 33 | Same as left | No | B | No | - | D | AA |
| Comparative Example | 34 | Same as left | No | B | No | - | D | A |
| Comparative Example | 35 | Same as left | No | B | No | - | D | A |
| Comparative Example | 36 | Same as left | No | B | No | - | D | A |

The underlined portions indicate that they are outside the scope of present disclosure.

While the preferred embodiments of the present disclosure have been described above in detail with reference to the accompanying drawings, the present disclosure is not limited to such examples. It is obvious that a person having ordinary knowledge in the technical field to which the present disclosure pertains can come up with various changes or modifications within the scope of the technical idea described in the claims, and it is understood that these also belong to the technical scope of the present disclosure.

REFERENCE SIGNS LIST

1, 1A, 1B, 1C, 1D Adhesively joined structure
11 Steel
12, 112 Plating layer
13, 113 Interface alloy layer
14, 114 Binary eutectic structure or ternary eutectic structure
2, 2A, 2B, 2C, 2D First member
21, 21A Metal portion
22, 22A Film portion
221 Resin particles
223 Organic compound phase
3, 3A, 3B, 3C, 3D Second member
31 Plated steel
32 Film portion
321 Resin particles
323 Organic compound phase
4, 4A, 4B, 4C, 4D Adhesive layer
5, 5B, 5C Bonding region

**Claims**

**1.** An adhesively joined structure, comprising:

a first member;
a second member; and
an adhesive layer which joins the first member and the second member to each other,
wherein either or both of the first member and the second member are a plated steel having a steel and a plating layer disposed on at least part of a surface of the steel,
an average chemical composition of the plating layer contains, by % by mass,

Al: 10.00% to 30.00%,
Mg: 1.00% to 15.00%,
Sn: 0.00% to 1.00%,
Si: 0.00% to 2.00%,
Ca: 0.00% to 2.00%,
Ni: 0.00% to 1.00%,
Fe: 0.01% to 15.00%,
Sb: 0.00% to 0.50%,
Pb: 0.00% to 0.50%,
Cu: 0.00% to 1.00%,
Ti: 0.00% to 1.00%,
Cr: 0.00% to 1.00%,
Nb: 0.00% to 1.00%,
Zr: 0.00% to 1.00%,
Mn: 0.00% to 1.00%,
Mo: 0.00% to 1.00%,
Ag: 0.00% to 1.00%,
Li: 0.00% to 1.00%,
Bi: 0.00% to 1.00%,
V: 0.00% to 1.00%,
Co: 0.00% to 1.00%,

In: 0.00% to 1.00%,
W: 0.00% to 1.00%,
P: 0.00% to 1.00%,
La: 0.00% to 0.50%,
Ce: 0.00% to 0.50%,
B: 0.00% to 0.50%,
Y: 0.00% to 0.50%,
Sr: 0.00% to 0.50%,
a total of Sb, Pb, Cu, Ti, Cr, Nb, Zr, Mn, Mo, Ag, Li, Bi, V, Co, In, W, P, La, Ce, B, Y, and Sr: 0.00% to 5.00%, and
a remainder: including Zn and impurities,
a surface of the plating layer is an uneven surface,
in a cross section of the plating layer, a relationship between a length Lo of the plating layer in a longitudinal direction in an observation region of the cross section and a total length Lr of a contour line of the surface of the plating layer in the observation region satisfies the following expression (1),
the plating layer includes one or both of a plurality of blocky binary eutectic structures or a plurality of blocky ternary eutectic structures, and
at least some of the plurality of blocky binary eutectic structures or the plurality of blocky ternary eutectic structures are continuously present from the surface of the plating layer to a position at 1/2 of an average thickness of the plating layer.

$$(Lr - Lo)/Lo \times 100 \geq 2.0(\%) \qquad (1)$$

**2.** The adhesively joined structure according to Claim 1,

wherein the first member is the plated steel having the steel and the plating layer, and
the second member is any one of a hot-dip galvannealed steel, a fiber-reinforced plastic material, an aluminum alloy material, or a magnesium alloy material.

**3.** The adhesively joined structure according to Claim 1,

wherein the plated steel includes the steel, the plating layer, and a film portion disposed on at least the uneven surface of the plating layer, and
the adhesive layer joins the first member and the second member to each other via the film portion.

**4.** The adhesively joined structure according to Claim 2,

wherein the plated steel includes the steel, the plating layer, and a film portion disposed on at least the uneven surface of the plating layer, and
the adhesive layer joins the first member and the second member to each other via the film portion.

**5.** The adhesively joined structure according to Claim 3 or 4,

wherein the film portion contains an organic resin phase containing one or more of a urethane group, an epoxy group, and an ester group, and an organic compound phase formed of an organic silicon compound having at least one of a Si-O bond and a Si-OH bond and a Si-C bond, and
in a case where the film portion is analyzed by time-of-flight secondary ion mass spectrometry while Ar sputtering the film portion from an adhesive layer side to a plating layer side to include an optional point of an interface between the plating layer and the film portion, a peak corresponding to a Si-O-Me bond is observed, and a value obtained by dividing a count number of peaks indicating the Si-O-Me bond by a total value of all detected secondary ion count numbers in a mass scan range of m/z = 0 to 300 is $1.0 \times 10^{-3}$ or more,
where the Me is one or two or more elements selected from Zn, Al, Mg, and Fe constituting the plating layer.

**6.** The adhesively joined structure according to Claim 1,

wherein the plating layer contains an Fe-Al-based interface alloy layer which is in contact with the steel, and
at least some of the plurality of blocky binary eutectic structures or the plurality of blocky ternary eutectic structures are continuously present from the surface of the plating layer to the Fe-Al-based interface alloy layer.

7. The adhesively joined structure according to Claim 1,

wherein, instead of the expression (1), the following expression (2) is satisfied,
the number of points where at least some of the plurality of blocky binary eutectic structures or the plurality of blocky ternary eutectic structures are continuously present from the surface of the plating layer to a position at 1/2 of an average thickness of the plating layer is 3 to 15 per rectangular region having a long side of 500 $\mu$m and a short side of 150 $\mu$m on the surface of the plating layer.

$$(Lr - Lo)/Lo \times 100 \geq 6.0(\%) \qquad (2)$$

8. The adhesively joined structure according to Claim 1,

wherein, instead of the expression (1), the following expression (3) is satisfied,
the number of points where at least some of the plurality of blocky binary eutectic structures or the plurality of blocky ternary eutectic structures are continuously present from the surface of the plating layer to a position at 1/2 of an average thickness of the plating layer is 5 to 15 per rectangular region having a long side of 500 $\mu$m and a short side of 150 $\mu$m on the surface of the plating layer.

$$(Lr - Lo)/Lo \times 100 \geq 8.0(\%) \qquad (3)$$

9. The adhesively joined structure according to Claim 1,
wherein points where at least some of the plurality of blocky binary eutectic structures or the plurality of blocky ternary eutectic structures are continuously present from the surface of the plating layer to a position at 1/2 of an average thickness of the plating layer are present in recessed parts of the uneven surface of the plating layer.

10. The adhesively joined structure according to Claim 6,
wherein points where at least some of the plurality of blocky binary eutectic structures or the plurality of blocky ternary eutectic structures are continuously present from the surface of the plating layer to the Fe-Al-based interface alloy layer are present in recessed parts of the uneven surface of the plating layer.

11. The adhesively joined structure according to Claim 1,
wherein in the average chemical composition of the plating layer, Al and Mg are Al: 10.00% to 25.00% and Mg: 4.50% to 15.00%.

12. The adhesively joined structure according to Claim 1,
wherein in the average chemical composition of the plating layer, Al and Mg are Al: 15.00% to 22.00% and Mg: 5.00% to 15.00%.

13. The adhesively joined structure according to any one of Claims 1, 11, and 12,

wherein in the average chemical composition of the plating layer, Sn is 0.05% to 0.50%, and
an $Mg_2Sn$ phase detected by X-ray diffraction measurement is in the plating layer.

14. The adhesively joined structure according to Claim 1, 11, or 12,

wherein in the average chemical composition of the plating layer, one or both of La and Ce are contained, and a total amount of La and Ce is 0.05% to 0.50%.

15. The adhesively joined structure according to Claim 13,
wherein in the average chemical composition of the plating layer, one or both of La and Ce are contained, and a total amount of La and Ce is 0.05% to 0.50%.

16. The adhesively joined structure according to any one of Claims 1 to 4,
wherein the first member and the second member are further joined by second joining.

17. The adhesively joined structure according to Claim 16,
wherein the second joining is spot welding.

**18.** A component for a vehicle, comprising:
the adhesively joined structure according to any one of Claims 1 to 4 or 6 to 12.

**19.** A component for a vehicle, comprising:
the adhesively joined structure according to Claim 5.

**20.** A component for a vehicle, comprising:
the adhesively joined structure according to Claim 13.

**21.** A component for a vehicle, comprising:
the adhesively joined structure according to Claim 14.

**22.** A component for a vehicle, comprising:
the adhesively joined structure according to Claim 15.

**23.** A component for a vehicle, comprising:
the adhesively joined structure according to Claim 16.

**24.** A component for a vehicle, comprising:
the adhesively joined structure according to Claim 17.

FIG. 1-1

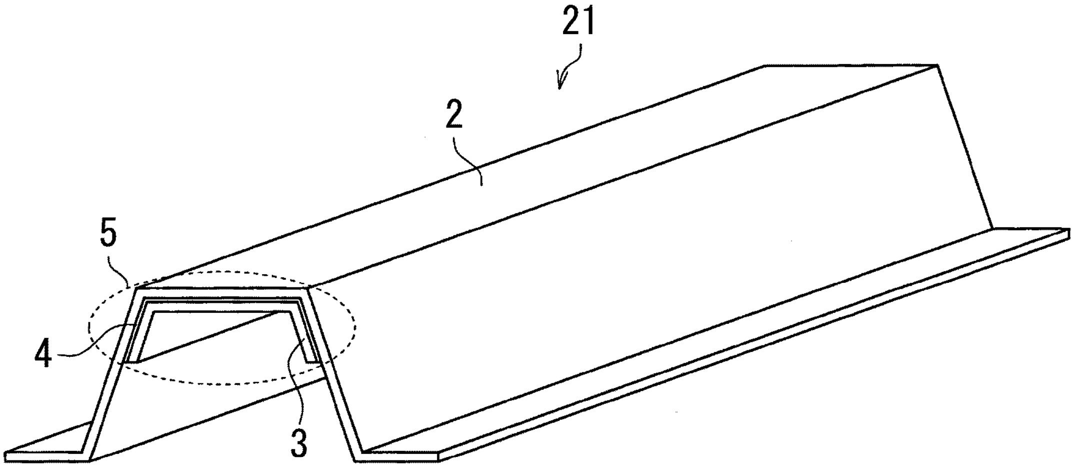


FIG. 1-2

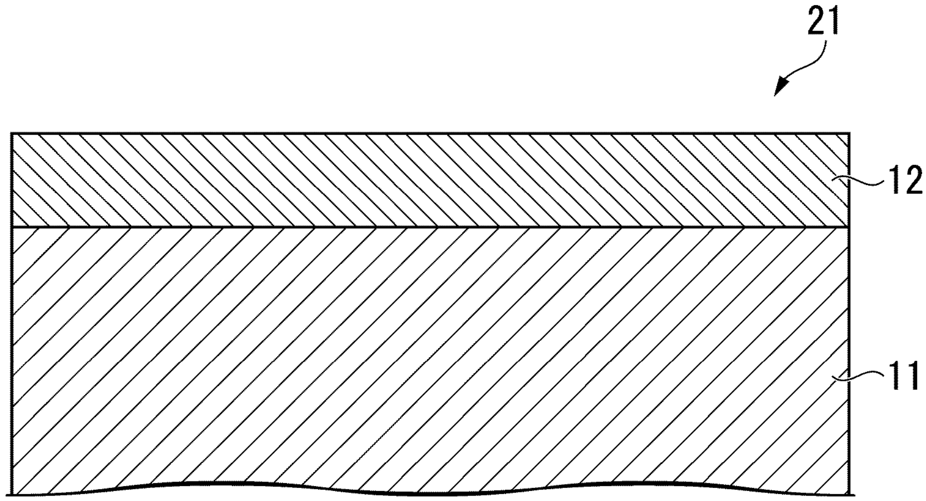


FIG. 1-3

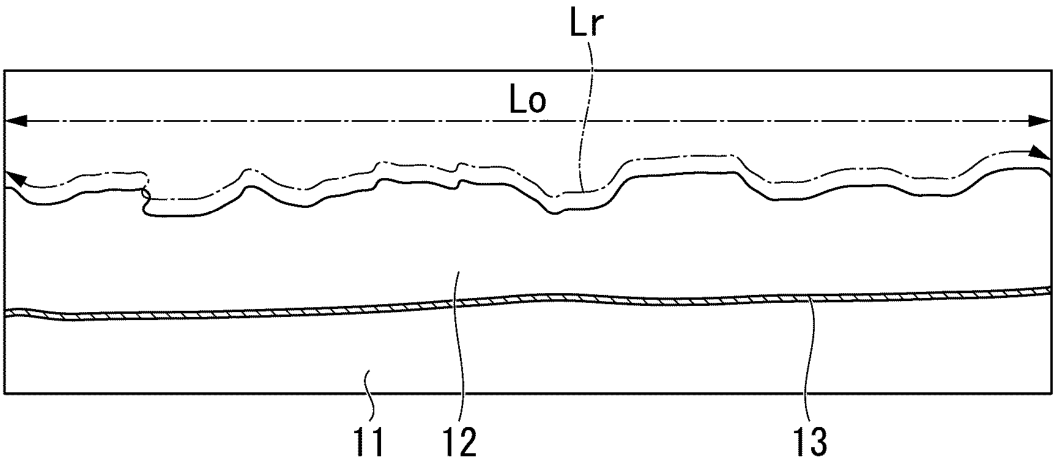

FIG. 1-4

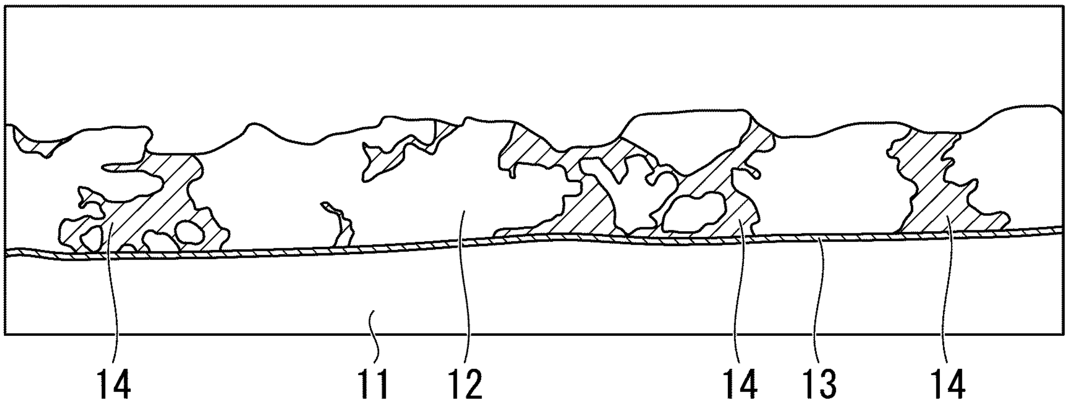


FIG. 1-5

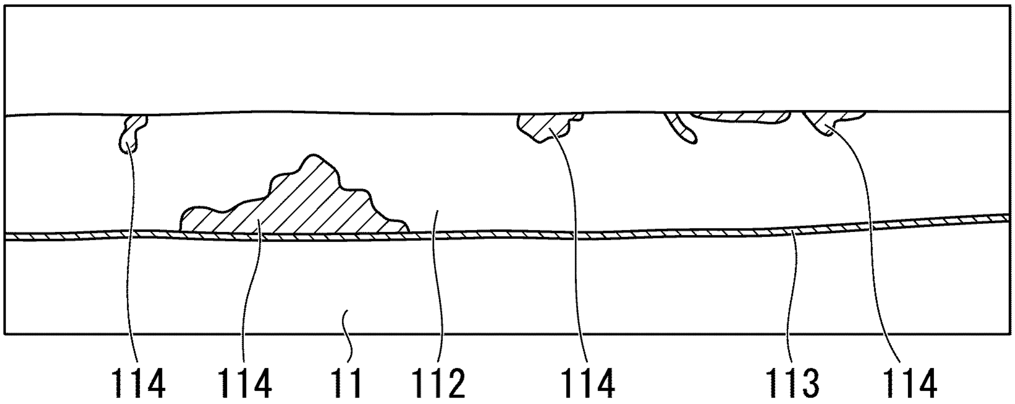


FIG. 2-1

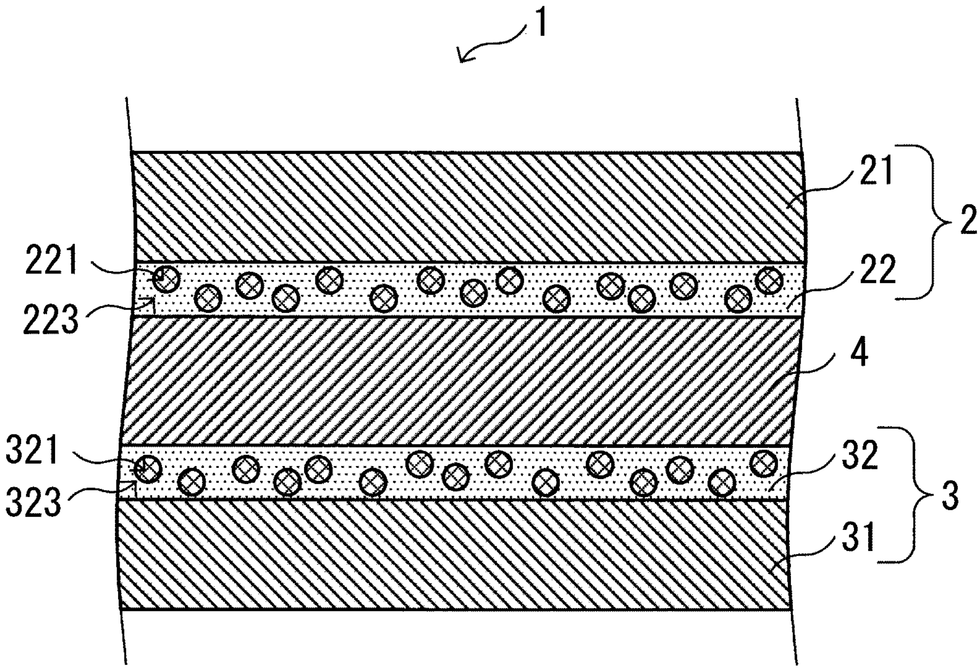

FIG. 2-2

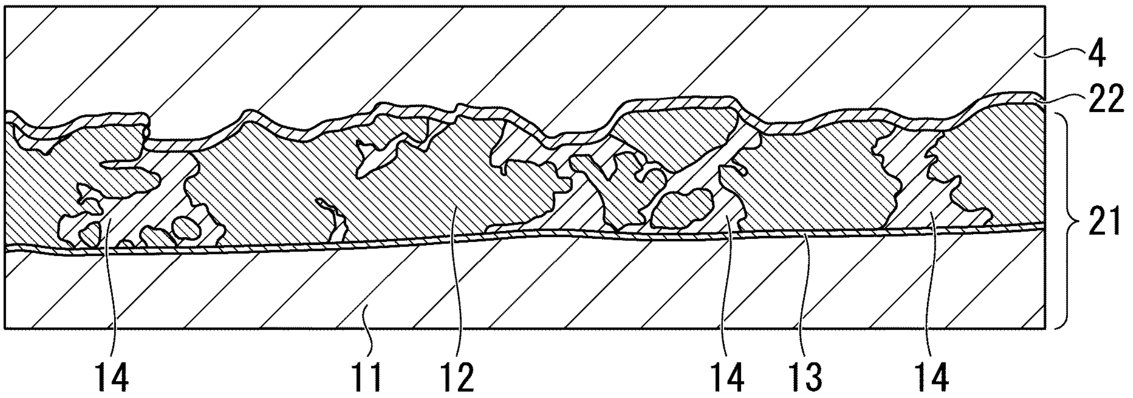


FIG. 3

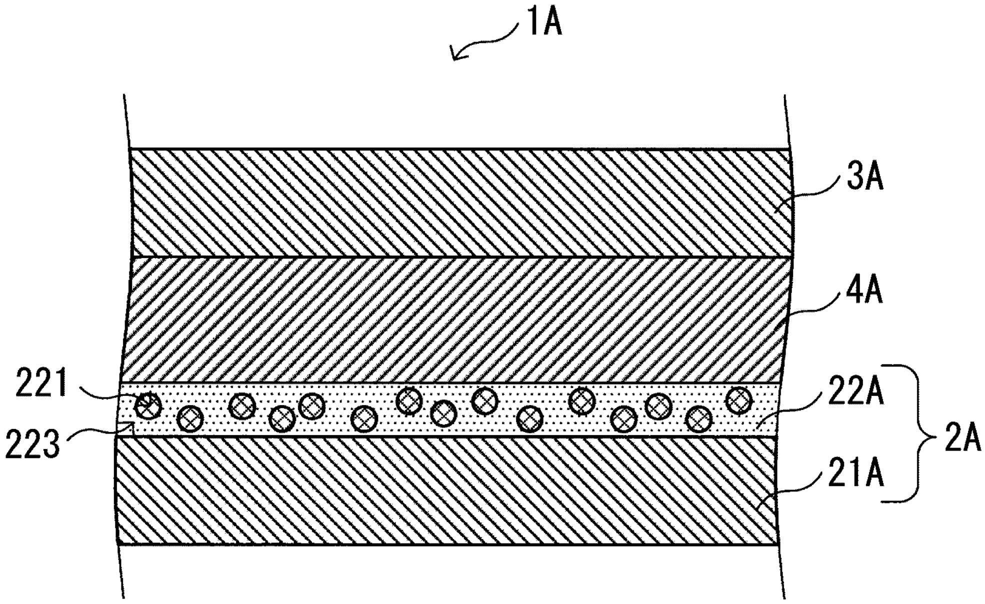


FIG. 4

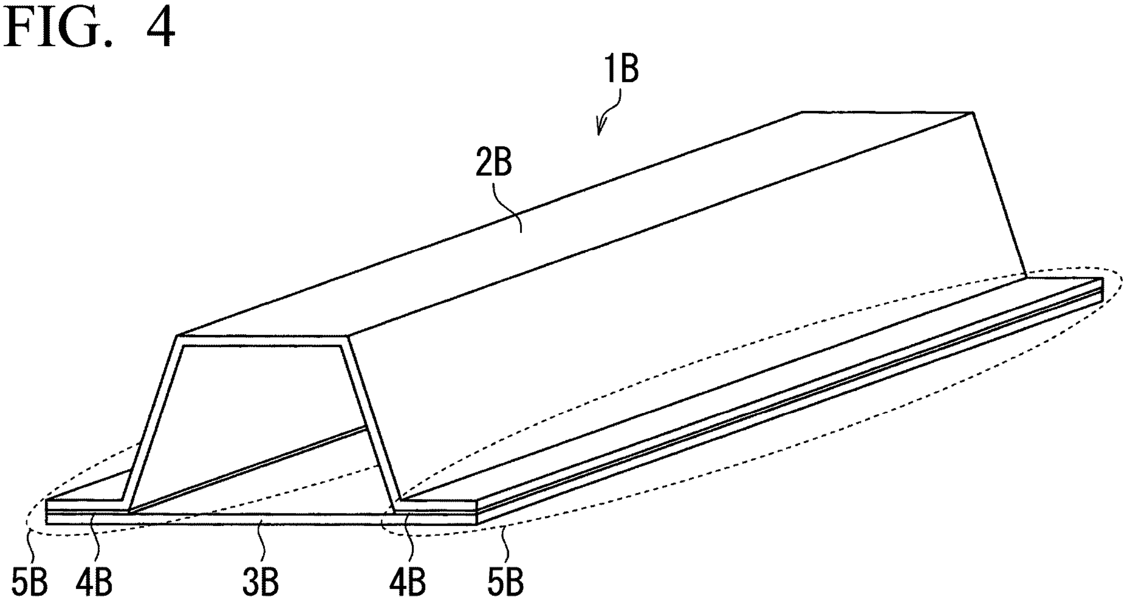

FIG. 5

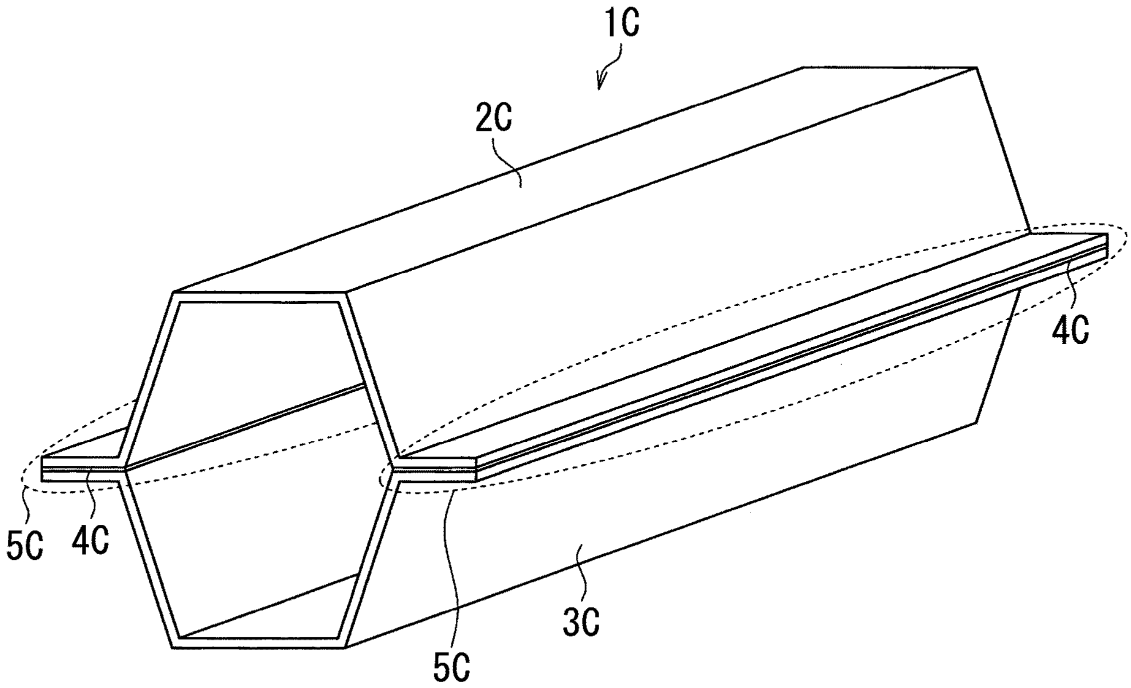


FIG. 6

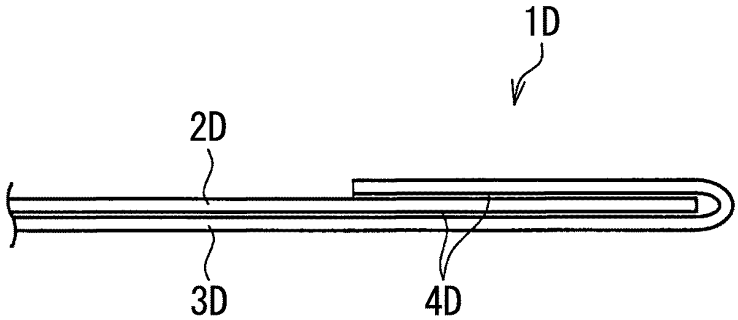


FIG. 7

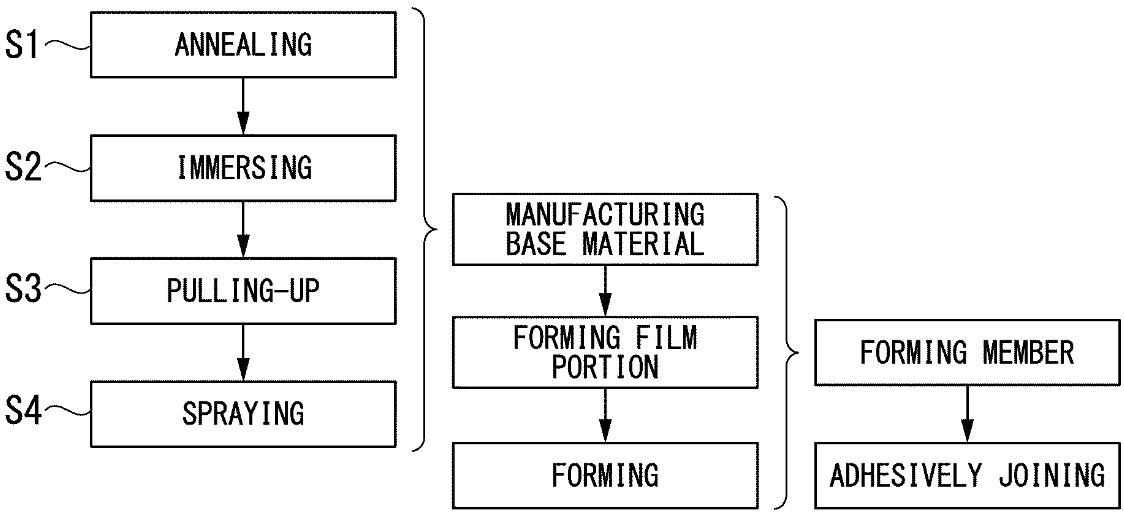

**INTERNATIONAL SEARCH REPORT**

International application No.
**PCT/JP2024/018653**

**A. CLASSIFICATION OF SUBJECT MATTER**

***B32B 15/08***(2006.01)i; ***B32B 7/12***(2006.01)i; ***B32B 15/18***(2006.01)i; ***B32B 15/20***(2006.01)i; ***C22C 18/00***(2006.01)i; ***C22C 18/04***(2006.01)i; ***C22C 38/00***(2006.01)i; ***C22C 38/04***(2006.01)i; ***C23C 2/06***(2006.01)i
FI: B32B15/08 N; B32B7/12; B32B15/18; B32B15/20; C22C18/00; C22C18/04; C22C38/00 301T; C22C38/04; C23C2/06

According to International Patent Classification (IPC) or to both national classification and IPC

**B. FIELDS SEARCHED**

Minimum documentation searched (classification system followed by classification symbols)

B32B15/08; B32B7/12; B32B15/18; B32B15/20; C22C18/00; C22C18/04; C22C38/00; C22C38/04; C23C2/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2011-157579 A (NISSHIN STEEL CO., LTD.) 18 August 2011 (2011-08-18) claims, paragraphs [0013], [0022] | 1-24 |
| Y | WO 2022/107837 A1 (NIPPON STEEL CORPORATION) 27 May 2022 (2022-05-27) claims, paragraphs [0102]-[0136], fig. 1-3 | 1-24 |
| Y | WO 2020/067430 A1 (NIPPON STEEL CORPORATION) 02 April 2020 (2020-04-02) claims | 1-24 |
| A | JP 56-096062 A (NIPPON STEEL CORPORATION) 03 August 1981 (1981-08-03) claims | 1-24 |
| A | JP 60-200953 A (KAWASAKI STEEL CORP.) 11 October 1985 (1985-10-11) claims | 1-24 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 August 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/018653**

| Patent document cited in search report | Publication date (day/month/year) | Patent family member(s) | Publication date (day/month/year) |
|---|---|---|---|
| JP 2011-157579 A | 18 August 2011 | (Family: none) | |
| WO 2022/107837 A1 | 27 May 2022 | US 2023/0304136 A1<br>claims, paragraphs [0170]-[0210], fig. 1-3<br>EP 4223897 A1<br>KR 10-2023-0070071 A<br>CN 116457483 A<br>CA 3195998 A<br>AU 2021381168 A<br>MX 2023005482 A<br>TW 202225424 A<br>CL 2023001380 A | |
| WO 2020/067430 A1 | 02 April 2020 | US 2021/0340407 A1<br>claims<br>EP 3858605 A1<br>CN 112770903 A | |
| JP 56-096062 A | 03 August 1981 | (Family: none) | |
| JP 60-200953 A | 11 October 1985 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023087181 A
- WO 2016076344 A
- WO 2017169571 A
- WO 2018139619 A
- WO 2018139620 A